# EUROPEAN PATENT SPECIFICATION

(11) **EP 3 347 437 B1**
(45) Date of publication and mention of the grant of the patent: **20.01.2021**
(21) Application number: 16843731.7
(22) Date of filing: 02.06.2016
(51) Int. Cl.: C10B 47/44, C10B 53/02

(54) **METHOD AND APPARATUS TO THERMALLY DECOMPOSE ORGANIC MATERIALS**
VERFAHREN UND VORRICHTUNG FÜR THERMISCHE ZERSETZUNG VON ORGANISCHEN STOFFEN
PROCÉDÉ ET APPAREIL DESTINÉS À LA DÉCOMPOSITION THERMIQUE DE MATIÈRES ORGANIQUES

(30) Priority: 07.09.2015 HU 1500404
(43) Date of publication of application: 18.07.2018
(73) Proprietor: Sárközi, Imre, 9028 Györ (HU); Zsenákné Sárközi, Virág, 8220 Balatonalmádi (HU); Turi, Tibor, 3700 Kazincbarcika (HU); Kincses, János, 2030 Érd (HU)
(72) Inventor: SÁRKÖZI, Imre, H-9028 Györ (HU)
(74) Representative: Danubia Patent & Law Office LLC
(86) International application number: PCT/HU2016/050021
(87) International publication number: WO 2017/042597

(56) References cited:
- WO-A1-2013/188288
- CN-U- 203 866 250
- DE-B3-102012 103 034
- US-A- 3 252 502
- EGSGAARD H ET AL: "Techniques in gas-phase thermolyses", JOURNAL OF ANALYTICAL AND APPLIED PYROLYSIS, ELSEVIER BV, NL, vol. 11, 1 October 1987 (1987-10-01), pages 25-38, XP026525715, ISSN: 0165-2370, DOI: 10.1016/0165-2370(87)85016-7 [retrieved on 1987-10-01]

## Description

The present invention relates to the processing and conversion of organic materials. In particular, the object of the invention is to provide a method and an apparatus to process organic substances, such as e.g. biomasses, municipal wastes, highly viscous oils (black oil, shale oil, etc.) in a closed system by thermal decomposition, in particular, by flash pyrolysis, wherein as a result of the processing, light oil fractions of high purity (such as gasoline, diesel oil) and/or oils with low kinematic viscosity at room temperature, hydrocarbon gases with one to four carbon atoms (C₁ through C₄) and slag with high coke content are produced as end products suitable for further utilization. The inventive solution provides continuous processing on the industrial scale, while the processing capacity can be increased modularly. Purity of the light oil fractions produced by the inventive solution makes said light oil fractions suitable for further utilization substantially without filtering.

In the case of thermal decomposition (pyrolysis) processes known today, the degradation process of melting and non-melting organic wastes is carried out in the thermal decomposition reactor itself. To this end, said waste materials are preheated before being entered the reactor, and then are degraded within the reactor under an oxygen free environment and with subjecting to continuous heating. The efficiency/quality of degradation, i.e. decomposition of the substances into chemical elements is highly dependent on the amount of oxygen within the reactor, thus a decrease in the amount of oxygen in the reactor space is of primary importance. In recent techniques widely applied, this decrease is aimed to be achieved mainly in a mechanical and/or chemical manner. Mechanical reduction of the amount of oxygen within the reactor is accomplished by applying a compression via a feeding screw, i.e. by means of squeezing out air from the reactor. To assist this process, the reactor and the feeding screw are both formed with a cross-section that gradually tapers along the direction of advancement of the substance, as disclosed e.g. in Hungarian patent application No. P1300709 and International Publication Pamphlet No. WO2011/131793 A2. Chemical reduction of the amount of oxygen within the reactor is accomplished by feeding oxygen absorbing additives, preferably e.g. zeolites, into the reactor chamber together with the waste material to be processed, as disclosed e.g. in Hungarian patent No. HU-227,728 B1 or Hungarian patent application No. P1300709.

International Publication Pamphlet No. WO2011/131793 A2 discloses a method and an apparatus to produce hydrocarbons from organic feedstocks. In the apparatus, the liquid or molten feedstock comprised basically of waste plastics and waste oil is transferred, after being preheated, by a feeding screw into a reactor with vertical or horizontal axis, wherein a rotor equipped with blades mounted on a tubular shaft spreads the feedstock comprising both liquid and solid components in a thin layer (preferably of 0.5 to 3.5 mm in thickness) and preferably at a temperature of 390 to 420°C onto the inner surface of the wall of the reactor, wherein said wall is heated (in particular, from the outside, by means of a heating jacket). Over said wall, the feedstocks are decomposed into gaseous, liquid and solid phase fractions. The gaseous fraction is drawn down from the reactor and subjected to further processing steps (to e.g. fractional distillation). The solid and liquid fractions are separated from one another and then subjected to appropriate further processing steps in accordance with the desired final products. Optionally, the reactor also comprises a rotor with scraping blades to scrape off the solid products that adhere to the inner surface of the reactor wall. The reactor to be used can be implemented as either a tubular reactor of constant diameter or a reactor with a design that conically tapers along the direction of advancement of the feedstock within the reactor.

The above discussed method and apparatus are not suitable for performing flash pyrolysis achieving perfect thermal decomposition of organic feedstocks.

Chinese utility model No. 203866250 U, teaches a fully automatic self-closed continuous feedstock processing system using a spiral transmission; the system can be used for continuously processing solid combustible feedstocks. The system comprises a main body and a conveying screw component, wherein an inner channel is arranged in the main body, and a solid feedstock inlet is formed in the first end of the inner channel, and a solid waste residue outlet is formed in the second end of the inner channel. The conveying screw component is arranged in the inner channel of the main body, and can be used for the whole course conveying the solid feedstock in the inner channel. The conveying screw component extends from the solid material inlet to a position with a certain distance from the solid waste residue outlet, and is used for pushing the solid waste residues to form sealing of the solid waste residue outlet. A solid feedstock inlet self-sealing section, a solid feedstock pyrolysis treatment section and a solid waste residue outlet self-sealing section are formed from the solid feedstock inlet of the inner channel to the solid waste residue outlet of the inner channel in sequence.

German Patent No. 10 2012 103034 B3 discloses a pyrolysis system comprising a main reactor arranged within a combustion chamber and a method to thermally process solid organic feedstock. The main reactor has an inlet for the solid feedstock and an outlet for solid product on opposite ends thereof. The system also has an outlet for vapours, at least one electrically driven conveying screw for conveying the feedstock in the system, and a tar precipitation section, a gas scrubbing section, an evaporator section and an activated coke treatment section in the form of a coke reactor arranged in parallel with the main reactor within the combustion chamber, wherein a transfer connects the main reactor and the coke reactor at the upper ends thereof. Said at least one conveying screw is a perforated screw with perforations located either in an upper portion of the screw (in the main reactor) or in its complete cross-section (in the reactor).

The object of the present invention is to eliminate the deficiencies of known solutions for thermal decomposition of organic feedstocks, and to alleviate or eliminate the technological problems related to the use of said solutions. As organic feedstocks, solid phase and liquid phase organic substances can equally be used.

In our studies, we have come to the conclusion, that perfect thermal decomposition of the organic substance content of an initial feedstock can be achieved by flash pyrolysis if solid phase melting organic substances (mixed plastics, rubber, municipal waste, biomass) and liquid phase, dense oils (black oil, shale oil) of high viscosity (having, in general, a kinematic viscosity of 800 to 1100 Poise) are overheated in an overheating unit arranged directly before the thermal decomposition (or cracking) reactor along the organic substance processing path to a temperature depending on the type of material, practically to a temperature in the range of 350 to 500°C, and the thus obtained mixed phase overheated organic substance - provided in the form of a mixture of a gas/vapor, a liquid and optionally a solid phase material - is then spread onto the inner surface of the reactor wall, which is heated from the outside, as a thin film when said substance is introduced into the reactor by a device that, essentially, does not impede free expansion and movement of gases/vapors released at a sudden within the reactor.

In our studies, we have come to the further conclusion, that it is highly preferred if a device used for spreading the overheated organic substance into a thin film and for conveying said substance within the reactor is provided in the form of a shaftless spiral. This way it can easily be avoided that a shaft resulting in flow resistance be installed into the internal space of the reactor, and therefore the vapor/gas fraction produced instantaneously from the feedstock by flash pyrolysis can flow freely and without being obstructed in the reactor space all the time during the conversion. According to our experiences, forming a film from the overheated organic substance also allows to achieve a highly efficient hydrocarbon recovery, substantially at a rate of 100%.

In our studies, we have also come to the conclusion, that it is preferable to provide the device used for film formation, in its preferred embodiment a shaftless spiral, with blades having a certain length, extending preferably along the whole length of the device, that is, the shaftless spiral, on the outer periphery thereof to facilitate the film formation. By means of said blades, a molten part of the feedstock entering the reactor in an overheated mixed phase is spread into a reasonably thin film (with a thickness of 1 to 1.5 mm, at most 2 mm) over the inner wall of the reactor, that ensures an instantaneously quick vaporization. The edges of the blades affixed to the shaftless spiral also continuously clean the inner wall of the reactor, thereby continuously removing the organic substance layers/spots getting deposited onto the reactor wall and forming thus thereon a heat insulating coating. Therefore, the heat transfer directed to the overheated mixed phase material in the reactor remains basically uniform over the whole inner surface of the reactor, and no hot spots, which would be detrimental to the life span of the reactor, are developed on the reactor wall. A further important advantage of the application of blades is that said blades greatly reduce or prevent the updraft of fine powdered carbon black - collected on the bottom of the reactor and advanced by the shaftless spiral toward the slag extractor - into the upper regions of the reactor space and hence its mixing with the vapor/gas fraction and then its subsequent leaving of the reactor space with the vapor/gas phase product stream. As a result, no coke contamination of the product stream occurs in a section of the processing path following the reactor, thus e.g. the light oil fractions obtained as end products are suitable for further use practically without being filtered.

In our studies, we have further come to the conclusion, that it is preferable to reduce the water content of the initial organic materials as much as possible if said materials are to be processed by instantaneous thermal decomposition carried out via flash pyrolysis in an oxygen-free environment. To this end, before performing thermal decomposition, the organic feedstocks, if necessary, are optionally subjected to intensive drying in a drying apparatus. The drying apparatus is preferably provided by a fluidized bed dryer due to its preferential drying ability. According to our experiences, the usage of a fluidized bed dryer as part of the inventive technical solution allows, in the case of e.g. a biomass feedstock, to achieve a moisture content of at most about 8 percent by weight of the biomass feedstock directly before the thermal decomposition step.

It is known, that an oxygen-free environment, i.e. the squeeze-out and/or expelling of atmospheric air from the reactor as perfectly as possible, is a requisite to achieve perfect flash pyrolysis within the reactor. This requirement shall be satisfied both at the entry of feedstocks into the reactor and at the exit of product stream(s) from the reactor. Accordingly, it is particularly important to prevent air from entering at or through the slag extractor. In our studies, we have come to the conclusion, that the entry of air through the slag extractor and into the reactor space can be practically entirely ruled out by means of sufficiently compressing the solid product material stream (i.e. the fine powdered slag with high coke content) to be extracted from the reactor during the extraction process and forming thereby a 'plug of slag' from the product stream that provides a gas-tight sealing of the slag extractor itself. To this end, the slag extractor is preferably realized by a combination of at least two slag discharge screw conveyors that are controlled so as to operate cooperatively. Said slag discharge screw conveyors are connected to each other substantially perpendicularly at the outlet of the reactor for solid materials, and to provide an air-tight sealing of the extraction path, the extraction of the solid material stream that comprises slag with high coke content is carried out by the slag discharge screw conveyors in such a way that a sufficiently tight but at the same time also resilient plug of slag is formed between the slag discharge screw conveyors. In order to avoid self-combustion of the slag with high coke content to be extracted, preferably both the jacket spaces and the discharge screws of said discharge screw conveyors are continuously cooled, preferably by means of e.g. water cooling.

In particular, the discharge screw conveyors are arranged in such a way that during operation, the first discharge screw conveyor conveys the powdered slag with high coke content toward the second discharge screw conveyor. The shaft of the first discharge screw conveyor is preferably horizontal, while the shaft of the second discharge screw conveyor is angled relative to the horizontal, it is inclined and gradually rises from the horizontal plane along the direction of extraction carried out by said conveyor; this arrangement is, however, not exclusive. The discharge screw of the first discharge screw conveyor is shorter than its jacket space to a given extent, thus as a consequence of compressing the slag by said first conveyor, a resilient plug of slag forms between the discharge screw of the first discharge screw conveyor and that of the second discharge screw conveyor. The first discharge screw conveyor is operated continuously, therefore more and more slag extracted from the reactor space by said first discharge screw conveyor is compressed and pressed against the discharge screw of the second discharge screw. As a result, an increase in torque occurs for the first discharge screw conveyor. As soon as the torque increase exceeds a preset threshold value, operation of the second discharge screw conveyor is initiated: it will mill off a part of the plug of slag on a side opposite to the discharge screw of the first discharge screw conveyor and conveys the slag milled off to a slag collecting container disposed at a free end of said second discharge screw conveyor. By removing a part of the plug of slag, the increase in torque on the first discharge screw conveyor drops below the preset threshold value, and hence operation of the second discharge screw conveyor is suspended; that is, operation of the second discharge screw conveyor is preferably intermittent. As a result of the cooperative operation of the two discharge screw conveyors, a gas-tight plug of slag will always be present in the extraction path that prevents atmospheric air from entering the reactor space through the slag extractor and also prevents gas phase hydrocarbons, mostly methane, generated in the reactor space from exiting through the slag extractor. The threshold value used for controlling the cooperation between the two discharge screw conveyors is chosen/set empirically in such a way that the plug of slag of a given length formed between said discharge screw conveyors will provide a gas-tight sealing in the extraction path at all times. Therefore, the magnitude of said threshold value correlates with the desired extent of gas-tightness of the plug of slag. In a further embodiment, one or more hydrocarbon sensors are arranged at the outer side of the slag extractor, preferably in the vicinity of the free end of said second discharge screw conveyor in order to continuously monitor the amount of hydrocarbons, mostly methane, escaping through the slag extractor. Here, obtaining the required extent of gas-tightness of said plug of slag is indicated by the fact that the hydrocarbon concentration measured by said sensor(s) decreases below a certain preset threshold value or becomes zero. In this case, the intermittent operation of said second discharge screw conveyor can thus be controlled by means of the measured hydrocarbon concentration value.

Beside the aforementioned active reactor space protection, which is based on creating a plug of slag and then maintaining suitable gas-tightness thereof, to ensure a protection of the reactor space against the entry of atmospheric air, an additional passive (mechanical type) reactor space protection is also utilized to augment the active protection. Accordingly, to provide sufficient sealing, the slag collecting container is attached to the free end of the second discharge screw conveyor via interposed rubber inserts.

In our studies, we have come to the yet further conclusion, that testing gas-tightness of the reactor space of a reactor according to the invention is significantly easier by monitoring an undesired gas flow (e.g. of hydrocarbon products) directed from the reactor space to the outside of the reactor than by monitoring an undesired gas flow (of atmospheric air) directed from the outside into the reactor space of a reactor. To exploit this concept, according to the invention, an overpressure higher than the outside atmospheric pressure is continuously maintained in the reactor space and the hydrocarbon product treating subunit connected to said reactor space.

Pressurization is preferably achieved by a vacuum pump. Said vacuum pump is in direct communication with the reactor space via an opening formed in the jacket of the reactor and continuously maintains a minimal overpressure of at most +50 mbar, preferably at most +30 mbar, more preferably at most +20 mbar relative to the external atmospheric pressure, wherein said overpressure is controlled appropriately on basis of the vapor/gas fraction produced within the reactor space. On the outer side of the slag extractor, in a direct proximity thereof, one or more hydrocarbon sensors, preferably methane detectors are arranged to detect gas phase hydrocarbon/methane escape through said slag extractor. As the exit of hydrocarbon/methane gas from the reactor space can be easily detected in this way, but the entry of atmospheric air into the reactor space cannot (or it could be detected but only by making use of expensive sensor means), the application of said overpressure proves to be advantageous for constructing both the active and passive protections of the reactor space.

Maintenance of said overpressure also helps with keeping the atmospheric air out of the reactor space.

The aforementioned and yet further objects, that will be also apparent in light of the below detailed description of the invention, are achieved by a method according to Claim 1 and an apparatus according to Claim 13 to process organic substances in a closed system by thermal decomposition. Further preferred variants of the inventive method are set forth in Claims 2 to 12. Further preferred embodiments of the apparatus according to the present invention are defined in Claims 14 to 23.

In what follows, the invention is described in detail with reference to the accompanying drawings, wherein
- Figure 1A illustrates in plan view an apparatus according to the invention for processing substantially solid phase organic substances (e.g. plastics, rubber, municipal waste, biomass);
- Figure 1B shows a possible further embodiment of the apparatus illustrated schematically in Figure 1A, which is primarily for processing liquid phase organic substances (e.g. black oil, shale oil);
- Figure 2 is a longitudinal sectional view of a fluidized bed dryer used in the apparatus illustrated in Figure 1A;
- Figure 3 is a longitudinal sectional view of an overheating unit included in the apparatuses shown in Figures 1A and 1B;
- Figure 4 shows a reactor for thermal decomposition that represents major part of the apparatuses illustrated in Figures 1A and 1B, as well as the specifically designed shaftless spiral used in said reactor;
- Figure 5 illustrates a preferred embodiment of the slag extractor used in the apparatuses shown in Figures 1A and 1B;
- Figure 6 schematically illustrates a preferred embodiment of the hydrocarbon product treating subunit that also forms part of the apparatuses shown in Figures 1A and 1B;
- Figure 7 presents phase changes of the organic substance associated with the processing by the method according to the invention; and
- Figures 8A and 8B show the result of a simple purity test performed with crack oils produced by the present invention from organic waste of a certain type/composition, wherein the sample according to Figure 8A is for a crack oil obtained when the overheating unit was offline, and the sample according to Figure 8B is for a crack oil obtained at normal operation (at a temperature of about 480°C) of said overheating unit.

The method according to the invention for processing organic substances starts with a preparation of the feedstocks. In this technological step, the feedstock consisting of e.g. municipal waste is mechanically separated into organic and inorganic fractions, then the organic waste is separated by further mechanical and biological processes to degradable and non-degradable wastes. Then those parts of the organic wastes, the components of which neither can be recycled nor degrades naturally over decades are ground to a given size and transported into storing containers by one or more e.g. pneumatic transport devices. The inorganic wastes obtained by the separation do not enter into the technological cycle defined by the inventive method. Nowadays, the feedstock preparation step is available in almost every waste treatment plant and the details thereof are known to all persons skilled in the art, hence no further details thereof are discussed herein. Accordingly, a detailed description of the inventive technical solutions starts at the point, where the ground organic waste is already arranged within the storage containers. Nowadays, this type of waste that is prepared for being used as feedstock according to the invention is either dumped and thus it further raises the landfills or combusted as energetic feedstocks. In the latter case, combustion has to be paid for, the energetic utilization itself is of low efficiency, the emission occurring during combustion is hazardous to health even if monitored and, hence, it is inevitable to make use of suitable cleansing and/or filtering apparatuses.

To convert the organic substances, that are not susceptible of being recycled, in the storage containers into storable energy carrier products by thermal decomposition according to the invention, said solid phase waste materials are classified basically into four groups. As after the degradation process the obtained products can be well utilized, although their material characteristics may differ from one another, feeding in and processing of said wastes within the reactor is performed on a type-by-type basis. This can equally take place by simultaneously operating multiple thermal decomposition reactors in a single apparatus according to the invention (utilizing preferably different thermal decomposing reactors for different types of wastes, the outlets of said reactors being connected to one another) or by feeding given amounts of different types of wastes into the same thermal decomposing reactor one after the other. To this end, said solid phase organic wastes are classified as follows:
- mixed plastic wastes, that get molten upon heating and thus squeeze out air (they may also contain a few percentage of halogen compounds);
- rubber products, that soften upon heating and completely fill the available space, but do not turn into liquid state (feeding such wastes into the apparatus preferably takes place along a straight line, as although they become plastic upon heating, they might well form plugs and get stuck at bends of the conduit when are advanced);
- municipal wastes, comprising a large percentage of mixed plastic waste that although get molten upon heating, due to the possible textile, biomass and paper content, also tend to form occlusions when are advanced; thus it is also preferable to provide a straight feeding path for their advancement in the apparatus;
- pure biomasses, that do not melt upon heating and contain air between tiny pieces/particles thereof, and hence are fed specifically, i.e. by means of squeezing out air through plug forming.

While processing of mixed plastic wastes, rubber and municipal wastes in the reactor are performed at a temperature of about 500 to 650°C, the processing temperatures for biomasses are about 400 to 450°C. Biomass feedstocks always reach this temperature range in the reactor for thermal decomposition, into which, as a consequence of being overheated, they enter in malleable state and being deprived of its former air content. The reactor itself is oxygen-free, thus combustion cannot take place therein. Overheating of mixed plastic wastes and municipal wastes is carried out at about 480°C, overheating of rubber products is carried out at about 450°C, while overheating of biomasses is carried out at a temperature of at most about 350°C.

In the processing method according to the invention, highly viscous oils, i.e. dense oils with a kinematic viscosity of 800 to 1000 Poise, such as black oils or shale oils may be used advantageously as liquids feedstocks. In the case of such feedstocks, processing means the cracking of long carbon chains that results in the production of low viscosity (about 80 to 120 Poise) crack oils. The processing of highly viscous oils in the reactor is carried out at a temperature of 580 to 620°C and the overheating of said highly viscous oils before being fed into the reactor is performed at about 460°C.

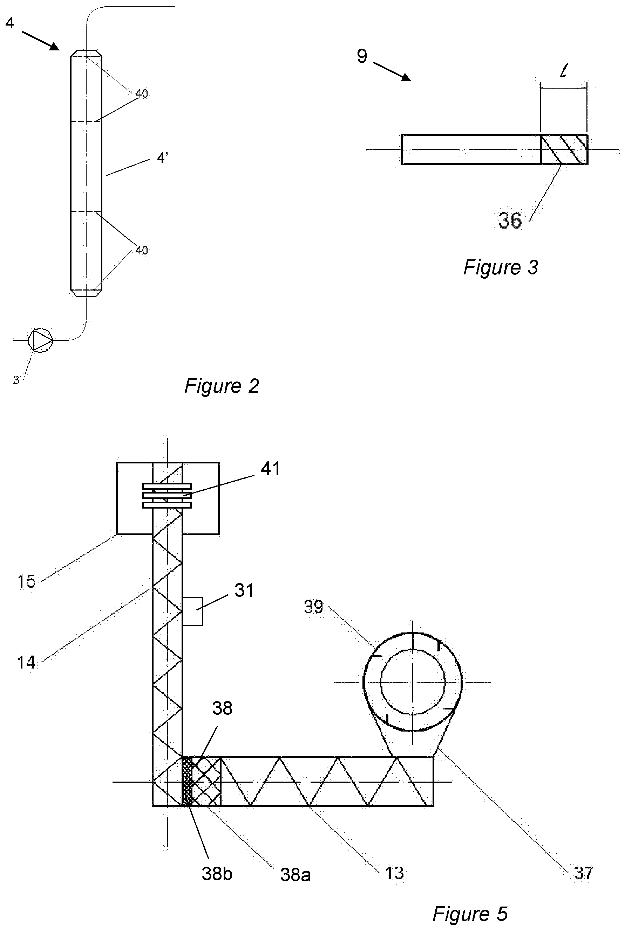

As previously described, to produce energy carrier products, the organic waste prepared as solid phase feedstock and the highly viscous oils as liquid phase feedstocks are processed in the apparatuses 100, 100', respectively, described in detail in what follows. Major parts of the apparatuses 100, 100' constitute, in accordance with Figures 3 to 6, at least a storage container 1, alternatively at least a heated storage container 1', as well as an overheating unit 9, a tubular reactor 39, a hydrocarbon product treating subunit 120 and a slag extractor 140. The apparatus 100 for processing solid phase organic substances further comprises a fluidized bed dryer 4, described in detail with reference to Figure 2. Said subunits are connected by suitable active and passive conveying means (e.g. conveying screws, pumps, and conduits, etc.). Said subunits and said conveying means define together a closed processing path between an entry point and one or more product collecting points. The feedstock passes through different stages of the processing path in different and/or mixed phases.

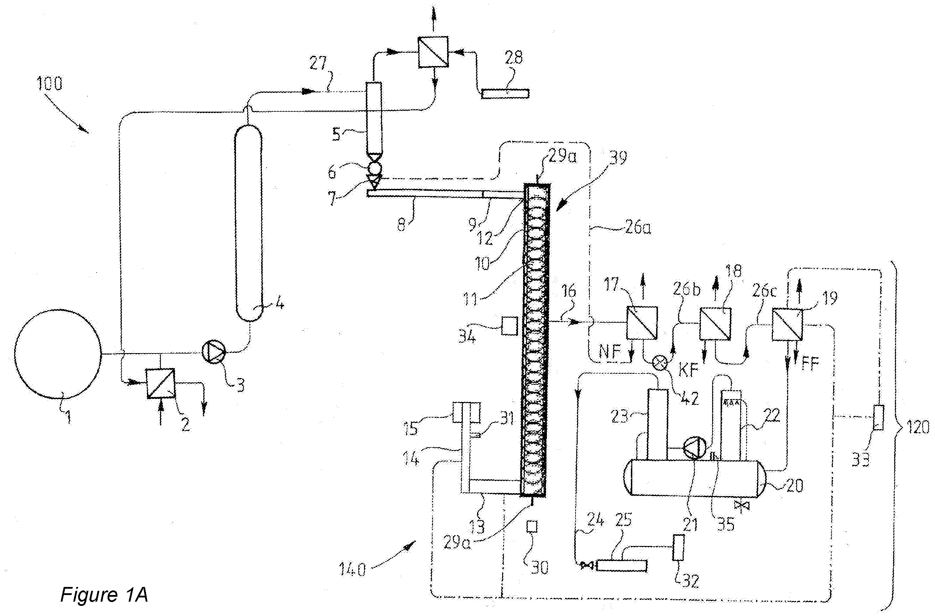

For example, in a preferred embodiment of the apparatus 100 illustrated schematically in Figure 1A, the one or more storage containers 1, as entry point, are connected to the inlet of the fluidized bed dryer 4 by an injector pneumatic conveying and feeding unit (not shown in the drawing) for transporting the feedstock. The capacity of said storage container 1 is preferably chosen to be appropriate for storing an amount of feedstock that covers the operation of 2 to 5 days, thus a continuous operation of the apparatus 100 can be maintained even in the event of smaller delays in/stoppages of supply. The feedstock stored in the storage container(s) 1 is protected from bin-burn, it is continuously ventilated, thereby its moisture content continuously decreases. Feedstock is conveyed from the storage container 1 to the fluidized bed dryer 4 by an injector pneumatic conveying apparatus, where the feedstock is dried while floated in a vertical cylindrical apparatus by air preheated in a heat exchanger 2. Said heat exchanger 2 is in heat exchanging coupling with an external heat source (not shown in the drawing); the heat source is preferably, but not necessarily, provided by waste heat generated in/by a further subunit of the apparatus 100.

Figure 2 shows in schematical longitudinal sectional view the fluidized bed dryer 4 to dry further the solid phase feedstock pre-dried in the storage container. Said fluidized bed dryer 4 is formed by substantially horizontal grates/sieves 40 arranged in a vertically oriented tube 4', the grates/sieves are formed by elements preferably cut out from a steel mesh with an area comparable to the cross-sectional area of the tube 4' and are arranged/mounted spaced apart from each other, preferably in a uniformly distributed manner, into the tube 4' that forms a housing of the fluidized bed dryer 4. Mesh opening of the grates/sieves 40 is greater than the average size of the particles of the ground feedstock. In the fluidized bed dryer 4, feedstock is conveyed by the injector conveying and feeding apparatus and kept flowing by low moisture content (dry) hot air blown by a fan 3. By forming mechanical obstacles, the grates/sieves 40 delay/slow flow-through of the ground feedstock when it passes through the fluidized bed dryer 4. In particular, they reduce the flow-through speed of the feedstock in the fluidized bed dryer 4, thus flowing hot air flows faster, while the entrained feedstock pieces flow slower in the upward direction within the vertical structure. Meanwhile, the coarsely ground organic substance contacts the upward-directed hot air flow in a large area and due to continuous collisions with the air, local turbulences are formed in the tube 4' that enables a yet further decrease in the bound (volumetric) moisture content of the feedstock (this is of particular importance if the feedstock is biomass). In the fluidized bed dryer 4, a relative velocity of flowing hot air and feedstock is chosen in dependence on the material characteristics and moisture content of the feedstock and is controlled substantially by the volume flow rate provided by the fan 3. Design of the fluidized bed dryer 4, i.e. the length and diameter of the tube 4', and the actual number of the grates/sieves 40 to be used are chosen empirically based on the material characteristics and moisture content of the feedstock to be dried. In order to monitor the latter, moisture sensors (not shown in the drawings) are disposed at both the inlet and the outlet of the fluidized bed dryer 4 for determining the moisture content of the feedstock. It should be here noted that, as far as the inventive solution is concerned, a low moisture content of the feedstock is preferred but not necessary.

The feedstock exiting from the fluidized bed dryer 4 with optimal moisture content (for plastic wastes and rubber wastes it is substantially 0%, in the case of biomass feedstocks it is at most 8%) is conveyed through a transport conduit 27 to a cyclone 5, where separation of the moist air and the feedstock is performed in a known manner: moisture content of the moist air is condensed in a cooler (not shown in the drawing), the condensate is then delivered to a condensate collector 28, and the dry air is fed back to a suction stub of the fan 3 that provides the preheated hot air for the flotation of the feedstocks. The air-free feedstock leaving the cyclone 5 is introduced to a tapering cramming screw 7 through a drum-type feeder 6, which feeds the inhomogeneous feedstock into a screw-type feeding unit 8 at a constant rate. The screw-type feeding unit 8 feeds the feedstock into the overheating unit 9. Feeding takes place with simultaneous plug forming. To this end, the screw of the screw-type feeding unit 8 is somewhat shorter than the jacket space of the screw-type feeding unit 8, thus feedstock gets compressed directly before being fed into the overheating unit 9 and thus prevents air from entering the overheating unit 9. The extent of compression of the feedstock is determined empirically and the screw of the screw-type feeding unit is designed accordingly. For a continuous preheating of the feedstock, the screw-type feeding unit 8 is practically divided into at least two, preferably three or four heating zones of different temperature. A solid/liquid (first) phase change of the melting or softening substances, such as e.g. mixed plastic wastes and rubber, takes place in the screw-type feeding unit 8; function of the screw-type feeding unit 8 is to heat/melt and simultaneously feed the feedstocks into the overheating unit 9. Accordingly, compression ratio of the screw-type feeding unit 8 is relatively low, preferably, it is only 1.5-1.7, however, this is sufficient to prevent backflow of material.

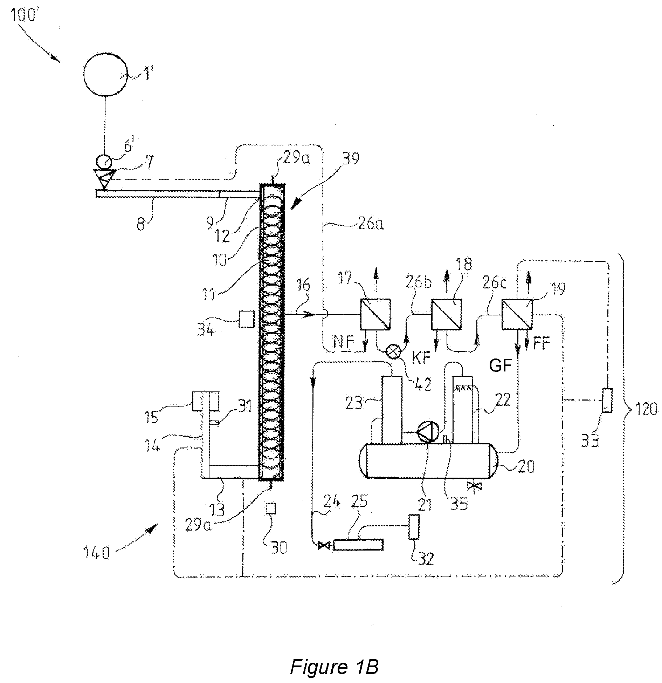

In the case of the apparatus 100' illustrated in Figure 1B, the raw organic substances of the processing method which are highly viscous (liquid but dense) oils having kinematic viscosity of 800 to 1100 Poise, e.g. black oils, shale oils, etc. are arranged in one or more heated storage vessels 1' functioning as entry points. Heating is necessary in order to avoid full congelation thereof and thus to maintain their fluency. Heating is provided by electric heating or waste heat generated in a further subunit of the apparatus 100' according to the invention; the latter may be transported directly or with an interposed heat exchanger to the highly viscous oils whose temperature in the storage tank 1' is preferably 70 to 120°C, which is sufficient to keep them fluent according to our experiences. The preheated highly viscous oil is introduced from the storage vessel 1' to the tapering cramming screw 7 by a gear pump 6' having a heated sleeve, practically through a short and preferably vertical feeding path. The length of the feeding path is preferably at most 500 mm. Similarly to its function in the apparatus 100, the tapering cramming screw 7 introduces the feedstock formed by highly viscous oils in this case, into the screw-type feeding unit 8 completing the feeding into the overheating unit 9. The liquid phase feedstock is gradually heated and becomes more and more fluent as it advances in the zones of different temperature of the screw-type feeding unit 8. The volume flow rate of feeding, i.e. a quantity control is carried out by controlling the speed of the gear pump 6'. The actual value of said speed is set on the basis of a viscosity measurement performed on the heavy oil fraction condensed in the hydrocarbon treatment subunit, the measurement will be described in detail later on. If the measured viscosity value is greater than a preset threshold value, speed of the gear pump 6' is reduced in an empirically determined manner (at a given rate and with a certain value) and vice versa. As in this case the purpose of the processing method according to the invention is to thermally decompose, i.e. crack long carbon chains of highly viscous oils and thus to produce crack oils with significantly lower kinematic viscosity that can be handled more easily at room temperatures, i.e. preferably with a viscosity of at most 120 Poise, more preferably about 80 to 120 Poise, said threshold value for viscosity is preferably set to about 120 Poise. The processing method of highly viscous oils after feeding into the screw-type feeding unit 8 is the same as the processing method of solid phase organic wastes to be described in detail below.

In the overheating unit illustrated in Figure 3, a further (second) phase change of the solid phase materials molten by heating or of liquid phase materials happens: these types of materials partially become vapor/gas phase and are subsequently introduced into the reactor space through an inlet formed on the jacket of the tubular reactor 39. In case of materials not susceptible to melting (e.g. biomass materials), the material is preheated to an optimal temperature - based on its characteristics - (i.e. to a temperature between 150°C and 300°C) before entering the reactor space. A part, having L length, of the end of the overheating unit 9 connected to the tubular reactor 39 is formed by a helical element 36, whose length is preferably about 30-40% of the total length of the overheating unit. The helical element 36 forces the feedstock stream flowing through it to a helical flow path. Due to the multiple phase changes, the flow rate increase and the angular momentum generated in the feedstock stream by the helical element 36 at the output of the overheating unit 9, a mixed phase medium comprising a mix of vapor/gas, liquid and solid phases having turbulent flow enters the tubular reactor 39 and impacts on the reactor body 10 (inner wall) of the tubular reactor 39 that is substantially perpendicularly connected to the overheating unit, and forms a thin film thereon.

The feedstock overheated (i.e. having a temperature between about 250°C and 500°C) in the overheating unit 9 and thus being in mixed phase (i.e. formed by a mix of vapor/gas, liquid and solid phases) is introduced into the reactor body 10 of the tubular reactor 39 through the inlet of the tubular reactor 39, where as a result of the suitable preparation it is subjected to perfect degradation by flash pyrolysis. The vapor/gas phase product stream created by thermal decomposition exits through an outlet conduit 16 communicating with the internal space of the tubular reactor 39 into the hydrocarbon processing subunit 120 - described in detail in what follows - where it is converted to energy carrier product preferably by for example fractional condensation and among others by e.g. gas washing. At the same time the solid phase formed by powdered slag with high coke content remaining in the internal space of the tubular reactor 39 is conveyed by a suitable conveyor to a slag extractor 140 described in detail in the following. The slag extractor 140 removes this solid product stream from the apparatus 100, 100' for further use. Based on the feedstocks, the amount of the solid phase is usually 5 to 45 percent by weight, this value is the lowest in the case of mixed plastic wastes, while it is higher in the cases of municipal waste, rubber and biomass. In the case of highly viscous oils, the amount of solid phase is 3 to 12 percent by weight depending on the viscosity and impurities.

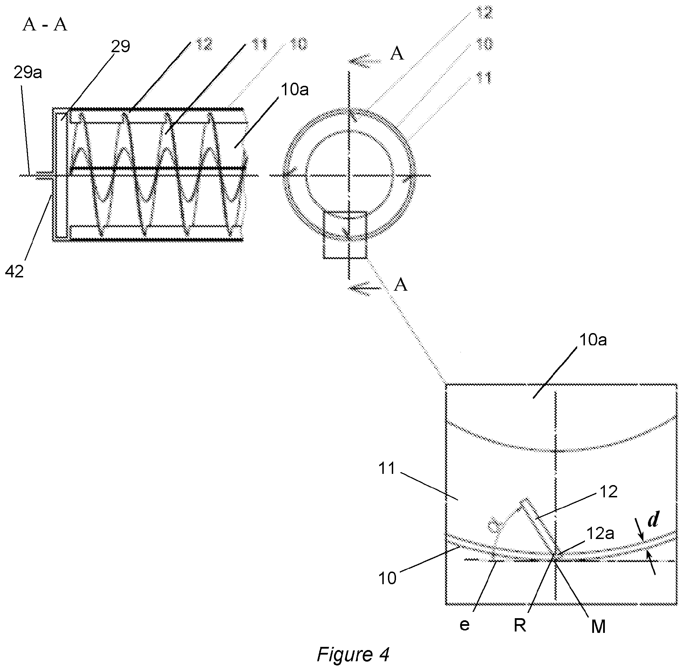

The major part of the apparatus 100, 100' according to the invention, the reactor performing actually thermal decomposition of solid phase organic substance at a temperature between about 500°C and 650°C, and thermal decomposition of highly viscous oils, i.e. liquid phase organic substance at a temperature between 580°C and 620°C is shown in detail in Figure 4. In this case, the reactor is formed as a horizontal tubular reactor 39. However, it is obvious to a person skilled in the art that - after the necessary modifications that can be found in literature (as to e.g. feedstock feeding) - the horizontal tubular reactor 39 may be implemented as an inclined axis tubular reactor or even as a vertical tubular reactor. The inlet of the tubular reactor 39 is sealed onto the outlet of the overheating unit 9 in a gas-tight manner. The tubular reactor 39 has substantially two outlets: a first outlet in communication with an outlet conduit 16 for extracting a vapor/gas phase product stream produced by flash pyrolysis in the reactor, and a second outlet sealed gas-tightly to the slag extractor 140 for extracting solid phase product stream produced as a result of flash pyrolysis. The tubular reactor 39 has a reactor body 10 formed by a tubular outer jacket and sealing lids 42 sealing opposing ends of the reactor body 10 in the longitudinal direction, preferably made of a stainless and/or corrosion resistant steel with high amount of alloying additions that is resistant to the chemical processes carried out in the tubular reactor 39. The first outlet is formed in the reactor body 10, in a top region of the tubular reactor 39, preferably at or in the proximity of the highest part thereof, and it is located preferably in the first half, more preferably in the first third of the length of the tubular reactor 39 measured from said inlet. The first outlet is formed as a single outlet port. The second outlet is formed in the reactor body 10, preferably at or in the proximity of the other end of the tubular reactor 39 opposite to the inlet, preferably in the bottom region of the tubular reactor 39, more preferably at the lowest situated portion of the tubular reactor 39. Heating elements are arranged on the outer surface of the reactor body 10, that are suitable to set the temperature required for the decomposition of the material in the reactor. In order to precisely control heat generation, said heating elements are preferably heating elements with ceramic inserts, however, the heating of the reactor body 10 from the outside may be provided by other means (e.g. by waste heat generated in other units of the apparatus according to the invention and transported back to here), as is obvious to a person skilled in the art.

For conveying the feedstock fed into the reactor, a single conveying device provided in the form of an endless transporting element is disposed in the reactor space 10a confined by the reactor body 10 and the sealing lids 42 in a gas-tight manner and is arranged coaxially with the longitudinal axis of the reactor body 10; in a particularly preferable embodiment, the conveying device is formed by a shaftless spiral 11, which is fastened on its opposite ends to discs 29 attached to shaft axles 29a (see Figures 1A and 1B) supported by suitable bearings (not shown in the drawings). The bearings are arranged outside the reactor body 10, the shaft axles 29a exit the tubular reactor 39 through its sealing lids 42 in a manner known by a person skilled in the art e.g. through a stuffing-box, while the discs 29 are located in the reactor space 10a next to the sealing lids 42, preferable in the proximity thereof. As the presence of oxygen (and thus of air) in the reactor space 10a is highly disadvantageous according to the present invention, the sufficient sealing of the entry points of the shaft axles 29a into the reactor space is provided by the stuffing-boxes. Furthermore hydrocarbon, preferably methane detectors are built into the casing of said stuffing-boxes on both ends of the tubular reactor 39, whose sensitivity falls within the ppm range, and thus even the smallest leakage of the reactor space 10a is reliably detected. A motor 30 arranged outside the tubular reactor 39 connected to one of the shaft axles 29a through suitable transmissions drives the shaftless spiral 11 and conveys thus the feedstock in the tubular reactor 39 from the inlet to the outlet. The motor 30 is preferably a speed-controlled electric motor.

There are preferably 2 to 12 pieces, more preferably 4 to 8 pieces of blades 12 attached, preferably welded onto the shaftless spiral 11 in attachment points R along the full length of the shaftless spiral 11 in a substantially uniform angular displacement to one another in such a way that said blades 12 extend from the shaftless spiral 11 into the gap with a width d that locates between the outer edge of the shaftless spiral 11 and the inner surface of the reactor body 10; here, the magnitude of d is a few millimeters, preferably about 3 mm, but at most 5 mm. Contrary to present practice, the blades 12 are attached to the shaftless spiral 11 in an orientation, where the blades are oriented at an angle α to a line e tangential to the reactor body 10 at the point of intersection M of the reactor body 10 and the radius of the reactor body 10 passing through the attachment points R. The angle α is preferably at least 45°and at most 70°, more preferably at least 50°and at most 65°, most preferably about 60°±2°. According to our experiences in or studies, the inclined blades are particularly advantageous during the removal of slag to keep the slag particles on or close to the inner surface of the rector body 10, because the inclined blades 12 present an obstacle for the slag particles to prevent their upward flow along with the vapors/gases during the material transport carried out by the shaftless spiral. As a result, a high majority of the slag with high coke content created during flash pyrolysis is removed from the tubular reactor 39 by the shaftless spiral 11. It is hereby noted that the slag with high coke content to be removed also provides lubrication during removal between the blades 12 and the inner surface of the reactor body 10, thus reduces the wear of the longitudinally bending shaftless spiral 11, the blades 12 attached thereto and the inner surface of the reactor body 10, thus it contributes to the extension of the life span of the tubular reactor 39 and parts thereof that are parts of the apparatus according to the invention.

The distance of the outer edges 12a of the blades 12 and the inner heat transferring surface of the reactor body 10 is preferably at most 4 mm, more preferably 2-3 mm. The function of the blades 12 is the spreading of the overheated, molten, partially vapor phase feedstock entering the tubular reactor 39 layer onto the inner surface of the reactor body in the form of a 0.5-3 mm, preferably 1-2 mm thick film, while the feedstock advances in the tubular reactor 39. As the final heat transferring surface is the reactor body 10 of the tubular reactor 39, the feedstock spread in a thin film thereto is instantaneously converted into vapor/gas phase decomposed to its constituents, i.e. flash pyrolysis is carried out in the reactor space 10a. To put it differently, the blades 12 - by film formation during the operation of the tubular reactor 39 - provide an increase in the heat transfer coefficient between the reactor body 10 and the feedstock. As a result of the inclination of the blades 12, the inner heat transfer surface of the reactor body 10 may be used for film formation in an angular range of about 300°. A further function of the blades 12 - besides the film formation - is the continuous cleaning of the full length of the inner surface of the reactor body 10, thus preventing feedstock from burning-on and sticking thereto, thus prevent the overheating of the reactor in spots. Above the previously mentioned functions, the blades 12 also serve the mechanical strengthening/stabilization of the shaftless spiral 11 having a large longitudinal extent.

In a preferred embodiment of the tubular reactor 39, the longitudinal dimension (length) of said tubular reactor 39, and thus of the reactor body 10 itself, is preferably about 6000 mm, while its internal diameter is 500 mm. The cross-sectional outer diameter of the straight shaftless spiral 11 is at least about 490 mm, more preferably 494 mm, while its internal diameter is between 380 mm and 434 mm, more preferably between 380 mm and 400 mm. An advantage of using a shaftless spiral 11 as the flighting element is that the reasonably large volume of gases/vapors released by the instantaneous thermal decomposition of feedstocks fed into the tubular reactor 39 and spread over the inner surface of the reactor body 10 by the blades 12 can expand freely and - in lack of an internal shaft -without being obstructed within the complete volume of the reactor space 10a in the direction of the inner axis, thus the gases/vapors instantaneously released do not exert local load on the shaftless spiral 11.

The ability of a tubular reactor equipped with a shaftless spiral as flighting/conveying element to affect an unobstructed free vapor/gas flow within the reactor can be characterized by the transmission coefficient of the tubular reactor. This measure can be defined as the ratio of the (free) area available in the reactor in a cross-section perpendicular to a longitudinal axis of said tubular reactor for gases/vapors generated within the reactor to freely flow and the total cross-sectional area of the tubular reactor. With the aforementioned design of the tubular reactor 39 and the shaftless spiral 11, the value of said transmission coefficient is at least about 0.6, i.e. at least about 60% of the cross-sectional area in the reactor according to the invention is available for the unobstructed expansion and free flow of gases/vapors generated instantaneously in the reactor. This value can be increased by reducing the cross-sectional area of the shaftless spiral 11, while maintaining the gap between the inner wall of the tubular reactor 39 and the outer edge of the shaftless spiral 11 at a given value for the film formation. With the aforementioned design of the tubular reactor 39 and the shaftless spiral 11, the value of the transmission coefficient can be as high as 0.78. Consequently, as much as 78% of the cross-sectional area of the reactor according to the invention is available for the gases/vapors produced instantaneously to expand and flow freely in the reactor, which is particularly preferred. In the case of the reactor according to the invention, said transmission coefficient can be set to any value in the range of 0.6 to 0.78 by suitably choosing the geometric parameters of the shaftless spiral 11 while the inner diameter of the reactor has got a fixed value. As reduction in the cross-sectional area of the shaftless spiral 11 is achieved in practice by decreasing the cross-sectional (annular) width of the shaftless spiral, strengthening/reinforcing function of the blades 12 is particularly advantageous for the shaftless spiral 11, because said blades 12 bear part of the load exerted to the shaftless spiral 11 during operation and thus partially relieve the shaftless spiral 11 of the load. It is obvious to a person skilled in the art, that the aforementioned values of the transmission coefficient characterizing the reactor and preferred in terms of flash pyrolysis can also be achieved by further geometric arrangements differring from the construction described herein.

In the case of exploting a tubular reactor 39 with the aforementioned parameters, the processing capacity of the apparatus 100, 100' according to the invention will be about 250 kg/hour, preferably, based on the feedstock, at most 300 kg/hour. Furthermore, the shaftless spiral 11 is operated at a low rotational speed, the preferred value of said rotational speed is 1 to 20 rpm, more preferably 2 to 15 rpm. Accordingly, the capacity of the apparatus 100, 100' according to the invention may primarily be increased through building together a plurality of tubular reactors 39 in a modular manner, wherein the inlets and outlets of the individual tubular reactor 39 are connected to common operating facilities, and each tubular reactor 39 is preferably operated simultaneously.

The thin film of the organic feedstock spread onto the inner surface of the tubular reactor 39 instantly absorbs heat transferred to the reactor space 10a through the reactor body 10 by the heating elements and decomposes into three fractions. Said three fractions comprise vapor, gas, and solid fractions. The ratio of the three fractions depends on the material properties of the feedstock. The mixed phase comprising vapor/gas fraction leaves the reactor space 10a through the outlet conduit 16 connected to the outlet port forming the first outlet of the tubular reactor 39 and is introduced into a hydrocarbon treatment subunit 120, where it converts into gas and liquid phase energy carrier products in further processing steps. Said outlet port and outlet conduit 16 are substantially of the same diameter as the inner diameter of the shaftless spiral, thus practically no decrease in the volume flow rate arises when the mixed fraction leaves the tubular reactor. The solid carbon based fraction is conveyed along the length of the tubular reactor 39 by the driven shaftless spiral 11 into the slag extractor 140. The solid fraction loses all its volatile components while it is transported through the tubular reactor 39 and thus arrives to the slag extractor 140 in the form of a high coke content dry powder.

Figure 5 illustrates the slag extractor 140 used in the apparatus 100, 100' according to the invention, wherein expelling air and preventing a leakage of residual hydrocarbons are ensured, in particular, by means of cooperating discharge screw conveyers 13, 14. Here, said leakage is optionally monitored by one or more hydrocarbon detectors disposed outside the slag extractor 140 at one or more locations. As methane is the lowest molecular weight component of the gases produced in the tubular reactor 39, for gas leakage monitoring, preferably, one or more methane detectors 31 are used as hydrocarbon detectors. Said methane detectors 31 may detect the escaping gas in ppm amounts, that pose neither health nor fire related hazards, but are enough to provide a chance for timely intervening on basis of the signals provided by said methane detector(s) 31 in case of a defect in/failure of gas-tightness.

Gas-tightness is ensured at the point where the solid phase leaves the tubular reactor 39 by directing the solid phase (slag with high coke content) leaving the tubular reactor via the second outlet of the tubular reactor 39 by means of a tapered fitting piece 37 into the first (horizontal axis) discharge screw conveyor 13 having cooled jacket space and discharge screw. The second discharge screw conveyor 14 is connected to the first discharge screw conveyor 13 substantially perpendicularly. Here, for the sake of simplicity, preferably only the jacket space of the second discharge screw conveyor 14 is cooled. The discharge screw of the first discharge screw conveyor 13 is shorter than the jacket space of the first discharge screw conveyor 13 by a certain length, preferably by at least 150 mm, more preferably by at least 175 mm, and even more preferably by about 200 mm. Therefore, as a result of the compression and thus the continuous compaction of slag at the point where the two discharge screw conveyors 13, 14 meet when said first discharge screw conveyor 13 operates, a plug 38 of slag leading to a resilient gas-tight sealing element forms from the powdered slag to be extracted by said discharge screw conveyor 13 in such a manner, that part 38a of the plug 38 of slag contacts the discharge screw of the first discharge screw conveyor 13, while part 38b of the plug 38 of slag contacts the discharge screw of the second discharge screw conveyor 14. The plug 38 of slag is at least 150 mm, preferably about 200 mm in length. Due to the continuous operation of the first discharge screw conveyor 13, the extent of compaction and pressure within the plug 38 of slag at the discharge screw of the second discharge screw conveyor 14 becomes higher and higher, and thus an increase in torque occurs for the first discharge screw conveyor 13. The control unit of the electric motor driving the first discharge screw conveyor 13 detects the thus increased power requirement. As soon as the power requirement exceeds a preset threshold value, the second discharge screw conveyor 14 comes into operation, mills off a part of the slag from the part 38b of the plug 38 of slag and then conveys the slag material milled off to a slag collecting container 15 disposed at the free end of the second discharge screw conveyor 14. When the power requirement drops below a certain preset value, the operation of the second discharge screw conveyor 14 is suspended. Due to the cooperation of the two discharge screw conveyors 13, 14, the plug 38 of slag is continuously present in the extraction path between the discharge screws (i.e. it is built from one end thereof, and eroded from the other one). As a consequence of operating said second discharge screw conveyor 14 on a power requirement basis, the plug 38 of slag maintains dimensions that provide gas-tightness at all times.

To avoid self-combustion, the slag that has been milled off is introduced into the slag collecting container 15 at a temperature of about 80°C. This is ensured by an intensive cooling of the discharge screw conveyers 13, 14. The cooling of said conveyors 13, 14, i.e. their respective parts, is provided by a cooling unit 33 (see Figures 1A and 1B), in the cooling circuit of which preferably water is circulated to the discharge screw conveyors 13, 14 as the cooling medium. The slag collecting container 15 and the second discharge screw conveyor 14 is connected to each other through a gas-tight sealing, provided in the form of e.g. one or more interposed rubber sealing elements.

The particle size and particle size distribution of the extracted slag is continuously monitored at the outlet of the slag extractor 140. To study the particle size and its distribution, particle size sensors 41 are arranged in or above the slag collecting container 15, which continuously collect particle size related data in relation to the slag product with high coke content obtained from the apparatus 100, 100'. Preferably, the particle size sensors 41 are optical sensors, however, other types of particle size sensors can also be used. The data characteristic of the particle size and particle size distribution of the slag are used to qualify the operation of the apparatus and the process according to the invention. According to our studies, a thermal decomposition process performed is optimal if the slag with high coke content leaving the tubular reactor 39 is comprised of a powdered material that has an average particle size of at most 8 mm, preferably at most 5 mm, and furthermore at least 80 percent by weight of a certain amount of said powdered material has an average particle size of at most 1.5 mm, preferably at most 1 mm.

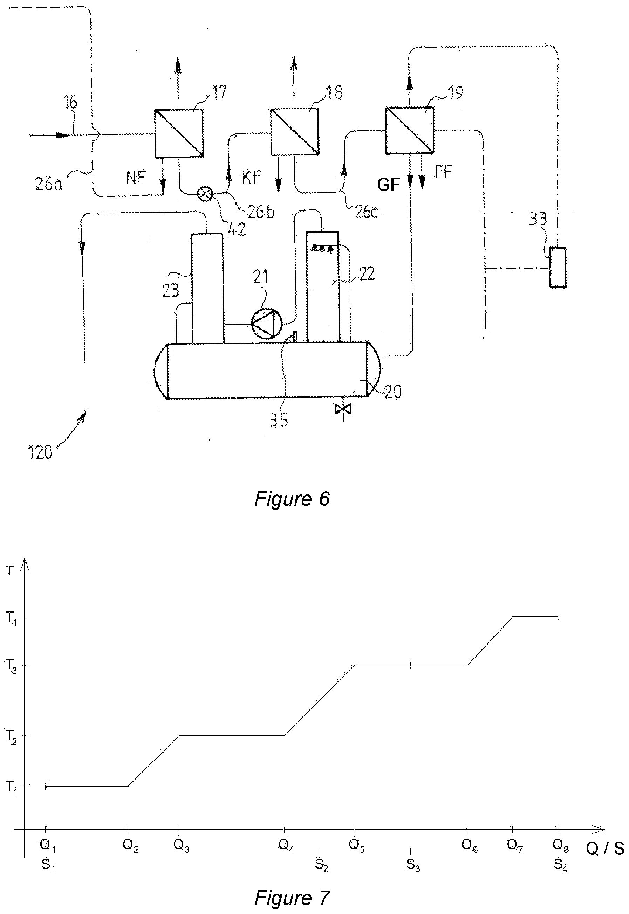

The mixed phase of vapors/gases leaving the reactor is introduced into the outlet conduit 16 communicating with the reactor space 10a, and is introduced through said conduit to the hydrocarbon treating subunit 120 of the apparatus 100 according to the invention schematically shown in Figure 6.

The mixed phase of vapors/gases leaving the reactor enters the outlet conduit 16 in fluid communication with the reactor space 10a, and then is introduced through this conduit into a hydrocarbon treating subunit, shown schematically in Figure 6, of the apparatus 100, 100' according to the invention. Here, said mixed phase is introduced into at least two partial condenser 17, 18 arranged one after the other, where said vapor phase gets completely condensed - here, in two stages. As a first stage of condensation, the mixed phase is cooled in the condenser 17 from a temperature of about 450°C to about 280°C by air cooling, as a result of which a heavy oil fraction NF separates and is withdrawn from the condenser 17, from the bottom region thereof. The heavy oil fraction NF is preferably formed by hydrocarbons with 21 to 34 carbon atoms (C₂₁ through C₃₄) (black oil, paraffin). The obtained heavy oil fraction NF is used in substantially two ways. On the one hand, depending on need, it is fed back into the tapered cramming screw 7 through conduit 26a, from there it is then introduced into the screw-type feeder 8, where it mixes with non-melting materials (e.g. biomass), and thus helps with the squeeze-out of atmospheric air from the feedstock before said feedstock enters the tubular reactor 39; hence, said heavy oil fraction NF contributes to the creation of conditions required for the occurrence of flash pyrolysis in the reactor. On the other hand, by operating the output of the condenser 17 as a product collecting point, the heavy oil fraction NF is collected in a product storage vessel (not shown in the drawing) for further use.

The mixed phase with a temperature of about 280°C remaining after the heavy oil fraction NF has condensed is led out from the condenser 17 through a conduit 26b and fed into the condenser 18. A viscosity meter 42 is inserted into the conduit 26b for monitoring and measuring the kinematic viscosity of the mixed phase, its data are used when the highly viscous oils are processed. As a second stage of condensation, the mixed phase is cooled from about 280°C to about 110°C in the condenser 18 by air cooling, as a result of which a light oil fraction KF gets condensed from the mixed phase and is withdrawn from the condenser 18, from the bottom region thereof. The light oil fraction KF is preferably formed by hydrocarbons with 9 to 20 carbon atoms (C₉ through C₂₀) (gasoline, diesel). By operating the output of the condenser 18 as a product collecting point, the light oil fraction KF is collected in a product storage vessel (not shown in the drawing) for further use; the thus obtained products do not congeal even at temperatures below 20°C, thus they can be used later on as motor fuels, energetic products or feedstock for the chemical industry.

As is obvious for a person skilled in the art, the aforementioned two condensation stages can be further improved, if desired, by installing further partial condensers, and thus more fractions can be collected.

The gas phase remaining after the condensation of the light oil fraction KF with a temperature of about 110°C is led out of the condenser 18 through a conduit 26c in order it be fed into a gas cooler 19, where said gas phase is separated into a liquid fraction FF and a gas fraction GF by water cooling. The liquid fraction FF is practically an oil-in-water type emulsion which contains finely dispersed droplets of hydrocarbons with 5 to 8 carbon atoms (C₅ through C₈) as residual after partial condensation. Accordingly, by operating the output of the gas cooler 19 as a product collecting point, the liquid fraction FF is collected in a product storage vessel (not shown in the drawing) for further use.

During a separation carried out in the gas cooler 19, the temperature of the gas fraction GF is reduced below 20°C by a low-temperature cooling medium (preferably water) provided by an external cooling unit 33. After being separated, the gas fraction GF contains no more liquids (e.g. oil droplets); the gas fraction GF is formed by a fraction of low temperature comprising only gases (hydrocarbons, nitrogen, carbon dioxide, carbon monoxide, hydrogen), which is subjected to a further treatment after its lead-out from the gas cooler 19 by means of directing it through an absorbent tank 20.

A liquid absorbent preferably having a pH in the range of 9-12 is arranged in the absorbent tank 20, the absorbent tank 20 communicates via the liquid absorbent with a first absorbent tower 22 and a second absorbent tower 23 arranged one after the other in the flow direction of the gas fraction GF, where a product outlet of the first tower 22 arranged in a top region of the tower 22 is connected by conduit to a product inlet of the second tower 23 in the bottom region of the tower 23. A vacuum pump 21 driven by an electric motor is interposed in this connecting conduit between the towers 22, 23. In order to increase surface area, both the first 22 and the second tower 23 is loaded with ceramic rings. In order to purify the gas fraction GF, it is drawn by said vacuum pump 21 through the first absorbent tower 22 in countercurrent with the liquid absorbent, and subsequently pressed through the second absorbent tower 23 to a product outlet formed in the top region of the second tower 23. The gas fraction GF leaves behind its remaining moisture content on the surface of the ceramic rings and thus a dry product gas fraction exits the product outlet. For further use this dry product gas fraction is fed through a conduit 24 to a gas tank 25 functioning as product collecting point. The gas tank 25 is equipped with a safety device formed as a flare 32, which releases gas from the gas tank 25 through a safety valve (not shown in the drawing) and directly afterwards combusts it when overpressure occurs in the gas tank 25. It is hereby noted that in Figure 6 (and also in Figures 1A and 1B) the conduits transporting material streams are marked by continuous lines, the heavy oil fraction NF transporting/recirculating conduit 26c is marked by a dashed line, while the cooling medium transporting conduits are marked by dotted-dashed lines.

In order to ensure the optimal progression of the chemical processes carried out in the absorbent tank 20, the pH of the liquid absorbent is preferably maintained at a constant value, preferably in said range of 9 to 12. To this end, the liquid absorbent is monitored by one or more pH measuring devices and if the absorbent is outside said optimal pH range, i.e. it is depleted, the liquid absorbent is refreshed. In order to ensure the continuous operation of the apparatus 100, 100' according to the invention, in a preferred embodiment of the hydrocarbon product treatment subunit 120, the gas scrubber formed by the absorbent tank 20 and corresponding towers 22, 23 is doubled, i.e. two of these gas scrubbers are built into this path in parallel connection with each other. The path of the gas fraction GF between the two substantially identical gas scrubbers is changed/selected by interposing suitable changeover valves (not shown in the drawing); the change is initiated on basis of the signal of the pH measuring device 35. In this way, temporal shutdown of the apparatus 100, 100' for the time of absorbent replacement/refreshing and thus interrupting the feedstock processing can be avoided, which would be anyway rather disadvantageous and costly due to the applied preheating and the usage of the reactor space in a continuously heated state.

In the apparatus 100, 100' according to the invention, the pressurization of between 0 and preferably at most +50 mbar relative to the atmospheric pressure preventing gas flow in the "from outside to inside" direction, thus in particular the entering of air into the tubular reactor 39, is set and maintained continuously by the speed control of the electric motor driving the vacuum pump 21 by drawing out the part of the vapor/gas fraction created by flash pyrolysis in the tubular reactor 39 that causes pressure above the optimal value by the vacuum pump 21.

Furthermore the apparatus 100, 100' further comprises an inert gas safety unit 34, which gets activated in the case of a severe technical failure/accident (a so-called havaria situation) and shuts down the thermochemical process immediately by flooding the reactor space 10a with an inert gas. Further details and operation of the safety unit 34 are known to a person skilled in the art, and thus these are not discussed herein.

Figure 7 exemplifies the phase changes and respective temperatures (T) of the solid phase organic feedstock to be processed in a simplified manner as a function of heat absorption (Q) and time passed (S) during the processing method according to the invention. Within the period S1-S2, the feedstock is located in the screw-type feeding unit 8 (see Figures 1A and 1B) provided with multiple heating zones: the feedstock enters the screw-type feeding unit 8 at instant S1 and at temperature T1, and then, while advancing continuously, it reaches temperature T2 > T1, preferably in the second temperature zone of the feeding unit, by absorbing an amount of heat Q3-Q2. At temperature T2, phase change (partial melting) of the solid phase feedstock starts, for which the feedstock absorbs a heat amount of Q4-Q3. Then said feedstock gets further heated while advancing in the screw-type feeding unit 8, and enters the overheating unit 9 (see Figures 1A and 1B) as a molten hot material at an instant S2. Here it gets further heated to temperature T3 > T2 by absorbing the total amount of heat Q5-Q4. When reaching temperature T3, a further phase change of the feedstock starts in the overheating unit 9 accompanied by further heat absorption: the feedstock starts to convert into gas phase. Then, advancing further along its processing path, the feedstock enters the tubular reactor 39 (see Figures 1A and 1B) at an instant S3 in the form of a mixed phase. Here, the molten, partially vapor phase material fully converts into a vapor/gas (except its carboneous and thus non-melting solid phase fraction) by absorbing a total amount of heat Q6-Q5. Then, as a consequence of further heating that accompanies the thin film formation within the tubular reactor 39, flash pyrolysis takes place. The constituents get further heated in vapor/gas phase, all the volatile constituents in the solid or liquid phases convert into vapor/gas phase and the vapor/gas phase is heated to temperature T4 > T3 by absorbing the total heat amount of Q7-Q6 (instant S4). As a result of the process, a large amount of vapor/gas and solid powdered slag with high coke content is produced in the screw-type feeding unit 8, the overheating unit 9, and the tubular reactor 39. In Figure 7, T1 represents the temperature of the entering material, T2 is the melting temperature (first phase transition), T3 is the vapor/gas transition temperature (second phase transition), while T4 stands for the highest temperature achieved in the reactor. As is obvious to a person skilled in the art, the actual values of temperatures T1 to T4 and heat amounts Q1 to Q8 depend on the material characteristics of the feedstock to be processed, thus Figure 7 serves merely for illustrating the trends of processes taking place during processing of the initial feedstock.

The following Tables 1.1 to 1.3 and Table 2 show the material yield of flash pyrolysis performed by the method and apparatus according to the present invention when processing different solid phase feedstocks and liquid phase feedstocks provided by highly viscous oils; the data indicated are average values obtained from multiple series of measurements. Energy content indicated in the tables means the amount of energy recoverable later on from one kilogram of the given product when it is used as energy carrier product.

**Table 1.1**

| *Type of solid phase feedstock* | Municipal waste | | Mixed plastic waste | |
|---|---|---|---|---|
| *Moisture content of the solid phase feedstock* | max. 5 wt% | | 0 wt% | |
| *Products obtained from the output* | Proportion (wt%) | Energy content | Proportion (wt%) | Energy content |
| crack oil | 44.20 | 27 MJ | 76.40 | 39 MJ |
| gas fraction (product) | 21.60 | 29 MJ | 18 | 46 MJ |
| water | 4.30 | | 0 | |
| solid fraction | 29.90 | 18 MJ | 5.60 | 19 MJ |
| (slag with high coke content) | | | | |

**Table 1.2**

| *Type of solid phase feedstock* | Rubber | | Biomass | |
|---|---|---|---|---|
| *Moisture content of the solid phase feedstock* | 0 wt% | | max. 8 wt% | |
| *Products obtained from the output* | Proportion (wt%) | Energy content | Proportion (wt%) | Energy content |
| crack oil | 42.20 | 37 MJ | 27 | 23 MJ |
| gas fraction (product) | 12.20 | 44 MJ | 25 | 27 MJ |
| water | 0 | | 6 | |
| solid fraction (slag with high coke content) | 45.60 | 19 MJ | 42 | 10 MJ |

**Table 1.3**

| *Type of liquid phase feedstock* | Black oil, Naphthene-base oils | |
|---|---|---|
| *Moisture content of the liquid feedstock* | 0 wt% | |
| *Products obtained from the output* | Proportion (wt%) | Energy content |
| heavy oils | 14 | 38 MJ |
| light oils | 78 | 39-41 MJ |
| gas fraction (product) | 5 | 42-44 MJ |
| water | 0 | |
| solid fraction (slag with high coke content) | 3 | 16-18 MJ |

**Table 2**

| **composition of the gas fraction (product)** | **(wt%)** | constituents |
|---|---|---|
| **C1-C4 hydrocarbons** | *75-80* | substantially methane, ethane, ethene, propane, propene, butane, butene |
| **hydrogen** | *4-8* | |
| **carbon dioxide, carbon monoxide** | *12-18* | |
| **nitrogen** | *0-14* | |

The normal operation of the apparatus 100, 100' according to the invention, e.g. the execution of the processing method according to the invention is provided, i.e. regulated, controlled and set by a control unit, preferably a combination of a computer and dedicated control devices, that is not shown in the drawing but is an integral part of the apparatus 100, 100' according to the invention. The control unit controls the operation of the apparatus 100, 100' according to the invention for processing organic substances based on a combination of firstly the signals (measurement results) of different sensors (e.g. different hydrocarbon/methane detectors, particle size sensors, viscosity meter, pressure sensors, moisture sensors, temperature sensors, pH sensors etc.) connected to subunits of the apparatus 100, 100' according to the invention, secondly input control parameters (e.g. different threshold values) for example but not exclusively it controls/handles the following operation functions: flow parameters in the optional fluidized bed dryer, feeding rate of the organic substances, temperatures of the zones of the screw-type feeding unit, the operating temperature of the reactor and the pressure in the reactor space, the speed and control of the motor used for driving the conveyor (shaftless spiral provided with blades) used in the reactor, controlling of processes in the hydrocarbon treatment subunit, the operation of the slag extractor for forming a plug of slag, determination of required feedback based on particle size, setting and continuous monitoring of other parameters required for normal and safe operation.

### Example

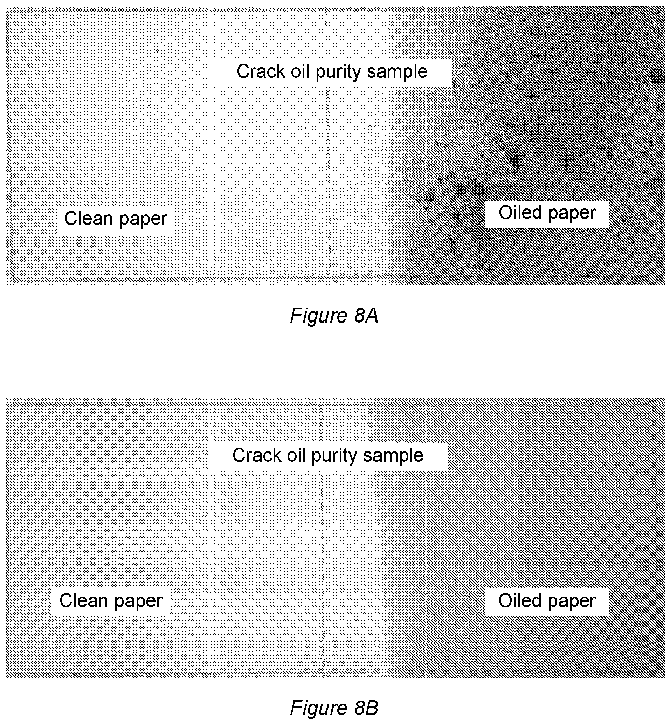

Figures 8A and 8B illustrate the results of a simple purity test performed with crack oils produced by the inventive technical solution from solid phase feedstocks of the same type. The crack oil used for conducting the test is produced by processing mixed municipal waste, wherein the processed mixed municipal waste contained 80 wt% mixed plastics (of which 45 wt% is polyethylene and/or polypropylene, 20 wt% is polystyrene and 15 wt% is polycarbonate), 7 wt% paper, 8 wt% textile and 5 wt% rubber. The sample according to Figure 8A is for a crack oil obtained when the overheating unit was offline, while the sample according to Figure 8B is obtained by using a crack oil that was obtained at normal operation (at about 480°C) of the overheating unit. The purity test included dipping paper strips made of ordinary white paper into the obtained crack oils; after removing said strips from the oils, absorption and spreading of oil over the paper strips was allowed to take place. The oils had wetted the paper strips as can be seen in Figures 8A and 8B. The crack oil obtained when the overheating unit was offline led to the formation of smaller or larger blackish spots/patches of irregular shape on a part of the paper strip wetted thereby (see Figure 8A). Study of the spots/patches indicated the presence of carbon black. When the test strip was wetted by the crack oil obtained at normal operation of the overheating unit, the color of the wetted region of the test strip was uniform golden yellow (see Figure 8B), blackish discolorations were not present in said wetted region. This implies that the crack oil used for the wetting experiment did not contain carbon black contamination, or it actually did, but only in an amount that was undetectable by naked eye. According to the test, it can be concluded that in lack of appropriate operation of the overheating unit, the organic feedstock fed into the reactor cannot undergo a perfect thermal decomposition and thus carbon black particles remain in the vapor/gas fraction leaving the reactor. Operating, however, the overheating unit seems to solve this problem, as a feedstock entering the reactor and being spread over the reactor wall as a thin film undergoes perfect degradation by flash pyrolysis. As a consequence of purity, light oil fractions (or crack oils) obtained by the continuous processing method according to the present invention are suitable for further use substantially without the requirement of being filtered before said further use.

## Claims

1. A method to process feedstock provided in the form of organic substance in a closed system by means of thermal decomposition, the method comprising
preparing the feedstock in a *per se* known manner for said processing;
feeding the prepared feedstock into a processing path and converting said prepared feedstock into a gas phase product, at least one liquid phase product and a solid phase product by guiding said feedstock along the processing path from an entry to an end thereof, ***characterized by*** performing the steps of
in a first stage of the processing path, preheating the prepared feedstock, thereby producing at least partially molten feedstock, then
in a second stage of the processing path, heating further said molten feedstock, thereby overheating and at least partially converting said molten feedstock into gas phase, then
in a third stage of the processing path, forming a thin film from said overheated and at least partially gas phase feedstock by mechanical film formation while heating further said feedstock and subjecting the feedstock in the form of the thin film to instantaneous thermal decomposition, thereby decomposing said feedstock to a vapor/gas fraction and a solid fraction, wherein said vapor/gas fraction expands over said third stage of the processing path in an unobstructed manner, said third stage of the processing path is provided by a tubular reactor (39) having an inner wall and a longitudinal axis, wherein
a straight shaftless spiral (11) supported by bearings and equipped with an electric drive is arranged in the tubular reactor (39) coaxially with the longitudinal axis thereof and with a spacing apart from said inner wall, the blades (12) extending substantially along the full length of the shaftless spiral (11) are affixed to the circumference of said shaftless spiral (11), each blade (12) extending towards the inner wall of the tubular reactor (39) into the spacing that separates the inner wall and the shaftless spiral (11) thereby providing individual gaps of certain sizes therebetween, each of said sizes being smaller than the size of the spacing, and
performing the mechanical film forming by spreading the overheated feedstock over the inner wall through the gaps between the inner wall of the tubular reactor (39) and the blades (12) in a thickness of at most 2 mm by means of rotating said shaftless spiral (11), then
(i) in a fourth stage of the processing path, at least partially condensing the obtained high temperature vapor/gas fraction, thereby producing the at least one liquid phase product and the gas phase product, further comprising
extracting the at least one liquid phase product from the processing path and storing said at least one liquid phase product for further use, and
after post-treating the gas phase product in a fifth stage of the processing path, extracting said gas phase product from the processing path and storing said gas phase product for further use,
(ii) in the third stage of the processing path, separating volatile constituents from said solid fraction, then extracting the obtained dry solid fraction from the third stage as the solid phase product and storing said solid phase product for further use; wherein the feedstock is guided over the processing path while maintaining oxygen-free environment in the stages of the processing path.

2. The method according to Claim 1, further comprising providing the oxygen-free environment by creating and continuously maintaining an overpressure in the processing path, the value of said overpressure being set to at most +50 mbar, preferably to at most +30 mbar, more preferably to at most +20 mbar.

3. The method according to any of Claims 1 to 2, further performing the mechanical film forming by spreading the overheated feedstock over the inner wall in a thickness of at most 1.5 mm.

4. The method according to any of Claims 1 to 3, wherein extracting the solid phase product is performed by discharge screw conveyor extraction of said dry solid fraction through an extraction path while maintaining oxygen-free environment in the third stage of the processing path by compacting the dry solid fraction and forming thereby a sealing element from said dry solid fraction that continuously seals the extraction path air-tightly.

5. The method according to any of Claims 1 to 4, further comprising rotating said shaftless spiral (11) at low speed, preferably at 1 to 20 rpm, more preferably 2 to 15 rpm.

6. The method according to any of Claims 1 to 5, wherein, in the fourth stage of the processing path, subjecting the vapor/gas fraction to subsequent partial condensations, wherein condensing from the vapor/gas fraction in a first partial condensation step a heavy oil fraction (NF) as product stream, and then condensing from the vapor/gas fraction residue of the first condensation step in a second partial condensation light oil fraction (KF) as product stream.

7. The method according Claim 6, further comprising feeding back the heavy oil fraction (NF) into the second stage of the processing path for re-processing.

8. The method according to any of Claims 1 to 7, further comprising at least one of
performing an absorption scrubbing of the gas phase fraction as said post-treatment in the fifth stage of the processing path, or
performing said overheating in the second stage of the processing path at a temperature between about 350°C to 500°C selected on basis of the material characteristics of the feedstock, or
performing said instantaneous thermal decomposition of the feedstock in the third stage of the processing path at a temperature between about 500°C and 650°C.

9. The method according to any of Claims 1 to 8, further comprising selecting the feedstock from a group consisting of mixed plastic wastes, rubber products, municipal wastes and biomasses.

10. The method according to any of Claims 1 to 9, further comprising subjecting the feedstock to fluidized bed drying before feeding into the first stage of the processing path so as to decrease initial moisture content of the feedstock to at most 8 wt%.

11. The method according to any of Claims 1 to 6, wherein the feedstock is provided in the form of highly viscous oils with kinematic viscosity of about 800 to 1000 Poise, such as black oils, shale oils, and wherein the method further comprises at least one of
performing an absorption scrubbing of the gas phase fraction as said post-treatment in the fifth stage of the processing path, or
performing said overheating in the second stage of the processing path at a temperature between about 350°C to 500°C selected on basis of the material characteristics of the feedstock .

12. The method according to Claim 11, further comprising performing the instantaneous thermal decomposition of the feedstock in the third stage of the processing path at a temperature between about 580°C and 620°C.

13. An apparatus to process feedstock provided in the form of organic substance in a closed system by means of thermal decomposition, wherein a continuous processing path is formed between an entry point and product collecting points, and wherein the feedstock is provided in at least one storage container (1; 1'), said at least one storage container (1; 1') is connected to the entry point for feeding the feedstock into the processing path, wherein the processing path comprises
a first stage configured for melting the feedstock at least partially by preheating;
a second stage configured for overheating and thereby converting the feedstock at least partially into gas phase;
a third stage configured for forming a thin film from said feedstock being overheated and at least partially in gas phase by mechanical film formation and for creating vapor/gas and solid fractions from the feedstock by instantaneous thermal decomposition of said thin film, wherein the third stage is provided with an internal structure that allows, in use, unobstructed expansion of the vapor/gas fraction, wherein
said third stage is a tubular reactor (39) with a reactor body (10) encasing a closed reactor space (10a), the tubular reactor (39) comprising an inner wall and a longitudinal axis, an inlet for entry of feedstocks into the reactor space (10a), separate outlets for discharging each of vapor/gas and solid fractions from the reactor space (10a), a conveyor means for transporting the feedstock/solid fraction within said reactor (39) from said inlet to said outlets and for performing mechanical film forming by spreading the feedstock onto the inner wall of the reactor body (10) in a thickness of at most 2 mm, and
said conveyor means is provided in the form of a straight shaftless spiral (11) supported by bearings and equipped with an electric drive arranged within the tubular reactor (39) coaxially with the longitudinal axis of the reactor and with a spacing apart from said inner wall, said blades (12) extending substantially along the full length of the shaftless spiral (11) are affixed at attachment points (R) to the circumference of said shaftless spiral (11), each blade (12) extending towards the inner wall of the tubular reactor (39) into the spacing that separates the inner wall and the shaftless spiral (11) thereby providing individual gaps of certain sizes therebetween, said each size being smaller than the size of said spacing;
a fourth stage configured for producing liquid phase and gas phase products by means of partially condensing a high temperature vapor/gas fraction; and
a fifth stage configured for post-treatment of a gas phase product; wherein
the entry point is arranged in the first stage and the product collecting points are arranged in said third, fourth and fifth stages.

14. The apparatus according to Claim 13, wherein a vacuum pump (21) is inserted into the processing path so as to maintain a constant overpressure in the third stage relative to the atmospheric pressure, wherein said overpressure is at most +50 mbar, preferably at most +30 mbar, more preferably at most +20 mbar.

15. The apparatus according to any of Claims 13 to 14, wherein the fourth stage is constructed in the form of at least two partial condensers (17, 18) connected in series with each other, said condensers (17, 18) being configured for operating in different temperature regimes to condense liquid phase products with different properties.

16. The apparatus according to any of Claims 13 to 15, wherein the fifth stage is provided as a gas scrubber, the gas scrubber comprising an absorbent tank (20) containing liquid absorbent, the absorbent tank (20) being in communication with a first absorption tower (22) located upstream in flow direction of a gas phase product and with a second absorption tower (23) connected to an outlet of the first absorption tower (22) and wherein said vacuum pump (21) is inserted into a conduit connecting said first and second absorption towers (22, 23).

17. The apparatus according to Claim 15, wherein said absorbent tank (20) of the gas scrubber is equipped with a pH meter (35) to monitor depletion of the liquid absorbent contained therein, and to emit a signal indicative of the depletion when the depletion actually takes place.

18. The apparatus according to Claim 17, wherein the fifth stage comprises two gas scrubbers connected in parallel with each other, the gas scrubbers being installed in the processing path with the possibility of change-over between said scrubbers, wherein said change-over is performed in response to the respective signal of the pH meter (35) indicating depletion of the absorbent.

19. The apparatus according to any of Claims 13 to 15, wherein a water-cooled gas cooler (19) is inserted into between the fourth and fifth stages for substantially a complete removal of the liquid content of the gas phase product.

20. The apparatus according to any of Claims 13 to 19, wherein the blades (12) are arranged with substantially uniform angular displacement to one another, and the blades (12) are inclined at an angle (α) to lines (e) tangential to the reactor body (10) at the points of intersection (M) of the reactor body (10) and the radii of the reactor body (10) passing through said attachment points (R), wherein the angle (α) of the blades is preferably at least 45° and at most 70°, more preferably at least 50° and at most 65°, most preferably about 60°±2°.

21. The apparatus according to any of Claims 13 to 20, wherein the first stage is provided in the form of a screw-type feeding unit (8) divided into at least two zones capable of being heated to different temperatures for melting feedstock at least partially, wherein - depending on the material characteristics of the feedstock - one of a drum-type feeder (6) and a gear pump with heated jacket space is connected to the inlet of the screw-type feeding unit (8) for feeding feedstock from the at least one storage container (1, 1').

22. The apparatus according to any of Claims 13 to 21, wherein the second stage is provided by an overheating unit (9) and is connected to the third stage through a helical element (36).

23. The apparatus according to any of Claims 13 to 22, wherein the tubular reactor (39) is provided with a screw-type extraction mechanism (13, 14) for extracting a solid phase product along an extraction path, said screw-type extraction mechanism (13, 14) is connected air-tightly to an outlet of the tubular reactor (39) for discharging the solid phase from the tubular reactor (39) and configured for forming, in use, a sealing element from the solid fraction that maintains a continuous gas-tight sealing in the extraction path.

## Patentansprüche

1. Verfahren zum Verarbeiten von Ausgangsmaterial, das in der Form von organischer Substanz bereitgestellt wird, in einem geschlossenen System mittels thermischer Zersetzung, wobei das Verfahren umfasst
Aufbereiten des Ausgangsmaterials in einer *an sich* bekannten Weise für das Verarbeiten;
Zuführen des aufbereiteten Ausgangsmaterials in einen Verarbeitungspfad und Umwandeln des aufbereiteten Ausgangsmaterials in ein Gasphasenprodukt, mindestens ein Flüssigphasenprodukt und ein Festphasenprodukt, indem das Ausgangsmaterial entlang des Verarbeitungspfads von einem Eingang zu einem Ausgang davon geleitet wird, ***gekennzeichnet durch*** Ausführen der folgenden Schritte
in einer ersten Stufe des Verarbeitungspfads, Vorheizen des aufbereiteten Ausgangsmaterials, wodurch mindestens teilweise geschmolzenes Ausgangsmaterial produziert wird, dann
in einer zweiten Stufe des Verarbeitungspfads, weiteres Heizen des geschmolzenen Ausgangsmaterials, wodurch das geschmolzene Ausgangsmaterial überhitzt und mindestens teilweise in Gasphase umgewandelt wird, dann
in einer dritten Stufe des Verarbeitungspfads, Bilden eines dünnen Films aus dem überhitzten und mindestens teilweise in Gasphase vorliegenden Ausgangsmaterials durch mechanische Filmbildung, während das Ausgangsmaterial weiter erhitzt wird, und Unterziehen des Ausgangsmaterials in der Form des dünnen Films einer sofortigen thermischen Zersetzung, wodurch das Ausgangsmaterial in einen Dampf-/Gasanteil und einen Feststoffanteil zersetzt wird, wobei der Dampf-/Gasanteil sich über die dritte Stufe des Verarbeitungspfads in einer ungehinderten Weise ausdehnt, wobei die dritte Stufe des Verarbeitungspfads durch einen Röhrenreaktor (39) bereitgestellt wird, der eine Innenwand und eine Längsachse aufweist, wobei
eine gerade achsenlose Spirale (11), die von Lagern getragen wird und mit einem elektrischen Antrieb ausgestattet ist, im Röhrenreaktor (39) koaxial mit der Längsachse davon und mit einer Abstandsfläche von der Innenwand beabstandet eingerichtet ist, wobei die Blätter (12), die sich im Wesentlichen entlang der gesamten Länge der achsenlosen Spirale (11) erstrecken, am Umfang der achsenlosen Spirale (11) angebracht sind, wobei jedes Blatt (12) sich zur Innenwand des Röhrenreaktors (39) in die Abstandsfläche erstreckt, die die Innenwand und die achsenlose Spirale (11) trennt, wodurch einzelne Zwischenräume gewisser Größen dazwischen bereitgestellt werden, wobei jede der Größen kleiner ist als die Größe der Abstandsfläche und
Ausführen der mechanischen Filmbildung durch Verteilen des überhitzten Ausgangsmaterials über die Innenwand durch die Zwischenräume zwischen der Innenwand des Röhrenreaktors (39) und den Blättern (12) in einer Dicke von höchstens 2 mm mittels Drehen der achsenlosen Spirale (11), dann
(i) in einer vierten Stufe des Verarbeitungspfads, mindestens teilweise Kondensieren des erhaltenen Hochtemperatur-Dampf-/Gasanteils, wodurch das mindestens eine Flüssigphasenprodukt und das Gasphasenprodukt produziert werden, weiter umfassend
Extrahieren des mindestens einen Flüssigphasenprodukts aus dem Verarbeitungspfad und Lagern des mindestens einen Flüssigphasenprodukts für eine weitere Verwendung und
nach Nachbehandeln des Gasphasenprodukts in einer fünften Stufe des Verarbeitungspfads, Extrahieren des Gasphasenprodukts aus dem Verarbeitungspfad und Lagern des Gasphasenprodukts für eine weitere Verwendung,
(ii) in der dritten Stufe des Verarbeitungspfads, Trennen von flüchtigen Bestandteilen aus dem Feststoffanteil, dann Extrahieren des erhaltenen trockenen Feststoffanteils aus der dritten Stufe als das Festphasenprodukt und Lagern des Festphasenprodukts für eine weitere Verwendung; wobei
das Ausgangsmaterial über den Verarbeitungspfad geleitet wird, während in den Stufen des Verarbeitungspfads eine sauerstofffreie Umgebung aufrechterhalten wird.

2. Verfahren nach Anspruch 1, weiter umfassend Bereitstellen der sauerstofffreien Umgebung durch Erzeugen und kontinuierliches Aufrechterhalten eines Überdrucks im Verarbeitungspfad, wobei der Wert des Überdrucks auf höchstens ±50 mbar eingestellt wird, vorzugsweise auf höchstens ±30 mbar, bevorzugter auf höchstens ±20 mbar.

3. Verfahren nach einem der Ansprüche 1 bis 2, weiter Ausführen der mechanischen Filmbildung durch Verteilen des überhitzten Ausgangsmaterials über die Innenwand in einer Dicke von höchstens 1,5 mm.

4. Verfahren nach einem der Ansprüche 1 bis 3, wobei Extrahieren des Festphasenprodukts durch Austragsschneckenextraktion des trockenen Feststoffanteils durch einen Extraktionspfad ausgeführt wird, während in der dritten Stufe des Verarbeitungspfads eine sauerstofffreie Umgebung aufrechterhalten wird, indem der trockene Feststoffanteil verdichtet wird und dadurch aus dem trockenen Feststoffanteil ein Verschlusselement gebildet wird, das den Extraktionspfad kontinuierlich luftdicht verschließt.

5. Verfahren nach einem der Ansprüche 1 bis 4, weiter umfassend Drehen der achsenlosen Spirale (11) bei geringer Geschwindigkeit, vorzugsweise 1 bis 20 rpm, bevorzugter 2 bis 15 rpm.

6. Verfahren nach einem der Ansprüche 1 bis 5, wobei in der vierten Stufe des Verarbeitungspfads der Dampf-/Gasanteil nachfolgenden Teilkondensationen unterzogen wird, wobei aus dem Dampf-/Gasanteil in einem ersten Teilkondensationsschritt ein Schwerölanteil (NF) als Produktstrom kondensiert wird, und dann aus dem Dampf-/Gasanteilrückstand des ersten Kondensationsschritts in einer zweiten Teilkondensation ein Leichtölanteil (KF) als Produktstrom kondensiert wird.

7. Verfahren nach Anspruch 6, weiter umfassend Rückführen des Schwerölanteils (NF) in die zweite Stufe des Verarbeitungspfads für eine erneute Verarbeitung.

8. Verfahren nach einem der Ansprüche 1 bis 7, weiter umfassend mindestens eines von
Ausführen eines Absorptionswaschens des Gasphasenanteils als Nachbehandlung in der fünften Stufe des Verarbeitungspfads oder
Ausführen des Überhitzens in der zweiten Stufe des Verarbeitungspfads bei einer Temperatur zwischen etwa 350 °C bis 500 °C, ausgewählt auf der Grundlage der Materialeigenschaften des Ausgangsmaterials oder
Ausführen der sofortigen thermischen Zersetzung des Ausgangsmaterials in der dritten Stufe des Verarbeitungspfads bei einer Temperatur zwischen etwa 500 °C und 650 °C.

9. Verfahren nach einem der Ansprüche 1 bis 8, weiter umfassend Auswählen des Ausgangsmaterials aus einer Gruppe, bestehend aus Kunststoffmischabfällen, Gummiprodukten, Siedlungsabfällen und Biomassen.

10. Verfahren nach einem der Ansprüche 1 bis 9, weiter umfassend Unterziehen des Ausgangsmaterials einem Wirbelschichttrocknen vor Zuführen in die erste Stufe des Verarbeitungspfads, um so den Anfangsfeuchtigkeitsgehalt des Ausgangsmaterials auf höchstens 8 Gew.-% zu reduzieren.

11. Verfahren nach einem der Ansprüche 1 bis 6, wobei das Ausgangsmaterial in der Form von hochviskosen Ölen mit kinematischer Viskosität von etwa 800 bis 1000 Poise, wie etwa Schwarzölen, Schieferölen, bereitgestellt wird und wobei das Verfahren weiter mindestens eines umfasst von
Ausführen eines Absorptionswaschens des Gasphasenanteils als Nachbehandlung in der fünften Stufe des Verarbeitungspfads oder
Ausführen des Überhitzens in der zweiten Stufe des Verarbeitungspfads bei einer Temperatur zwischen etwa 350 °C bis 500 °C, ausgewählt auf der Grundlage der Materialeigenschaften des Ausgangsmaterials.

12. Verfahren nach Anspruch 11, weiter umfassend Ausführen der sofortigen thermischen Zersetzung des Ausgangsmaterials in der dritten Stufe des Verarbeitungspfads bei einer Temperatur zwischen etwa 580 °C bis 620 °C.

13. Einrichtung zum Verarbeiten von Ausgangsmaterial, das in der Form von organischer Substanz bereitgestellt wird, in einem geschlossenen System mittels thermischer Zersetzung, wobei ein kontinuierlicher Verarbeitungspfad zwischen einem Eingangspunkt und Produktsammelpunkten gebildet wird und wobei das Ausgangsmaterial in mindestens einem Lagerbehälter (1; 1') bereitgestellt wird, wobei der mindestens eine Lagerbehälter (1; 1') mit dem Eingangspunkt zum Zuführen des Ausgangsmaterials in den Verarbeitungspfad verbunden ist, wobei der Verarbeitungspfad umfasst
eine erste Stufe, die konfiguriert ist, um das Ausgangsmaterial durch Vorheizen mindestens teilweise zu schmelzen;
eine zweite Stufe, die konfiguriert ist, um das Ausgangsmaterial zu überhitzen und dadurch das Ausgangsmaterial teilweise in Gasphase umzuwandeln;
eine dritte Stufe, die konfiguriert ist, um aus dem Ausgangsmaterial, das überhitzt wird und mindestens teilweise in Gasphase vorliegt, durch mechanische Filmbildung einen dünnen Film zu bilden, und um aus dem Ausgangsmaterial durch sofortige thermische Zersetzung des dünnen Films Dampf-/Gas- und Feststoffanteile zu erzeugen, wobei die dritte Stufe mit einer Innenstruktur bereitgestellt wird, die bei Verwendung ungehinderte Ausdehnung des Dampf-/Gasanteils ermöglicht, wobei
die dritte Stufe ein Röhrenreaktor (39) mit einem Reaktorkörper (10) ist, der einen geschlossenen Reaktorraum (10a) umschließt, wobei der Röhrenreaktor (39) eine Innenwand und eine Längsachse, einen Einlass zur Eingabe von Ausgangsmaterialien in den Reaktorraum (10a), getrennte Auslässe zum Ablassen jedes von Dampf-/Gas- und Feststoffanteilen aus dem Reaktorraum (10a), ein Fördermittel zum Befördern des Ausgangmaterials/Feststoffanteils innerhalb des Reaktors (39) vom Einlass zu den Auslässen und zum Ausführen von mechanischer Filmbildung durch Verteilen des Ausgangsmaterials auf die Innenwand des Reaktors (10) in einer Dicke von höchstens 2 mm umfasst und
das Fördermittel in der Form einer geraden achsenlosen Spirale (11) bereitgestellt wird, die von Lagern getragen wird und mit einem elektrischen Antrieb ausgestattet ist, die im Röhrenreaktor (39) koaxial mit der Längsachse des Reaktors und mit einer Abstandsfläche von der Innenwand beabstandet eingerichtet ist, wobei die Blätter (12), die sich im Wesentlichen entlang der gesamten Länge der achsenlosen Spirale (11) erstrecken, an Befestigungspunkten (R) am Umfang der achsenlosen Spirale (11) angebracht sind, wobei jedes Blatt (12) sich zur Innenwand des Röhrenreaktors (39) in die Abstandsfläche erstreckt, die die Innenwand und die achsenlose Spirale (11) trennt, wodurch einzelne Zwischenräume gewisser Größen dazwischen bereitgestellt werden, wobei jede Größe kleiner ist als die Größe der Abstandsfläche;
eine vierte Stufe, die konfiguriert ist, um mittels Teilkondensierung eines Hochtemperatur-Dampf-/Gasanteils Flüssigphasen- und Gasphasenprodukte zu produzieren; und
eine fünfte Stufe, die zur Nachbehandlung eines Gasphasenprodukts konfiguriert ist; wobei
der Eingangspunkt in der ersten Stufe eingerichtet ist und die Produktsammelpunkte in der dritten, vierten und fünften Stufe eingerichtet sind.

14. Einrichtung nach Anspruch 13, wobei eine Vakuumpumpe (21) derart im Verarbeitungspfad eingesetzt ist, dass in der dritten Stufe ein konstanter Überdruck in Bezug auf den atmosphärischen Druck aufrechterhalten wird, wobei der Überdruck höchstens ±50 mbar beträgt, vorzugsweise höchstens ±30 mbar, bevorzugter höchstens ±20 mbar.

15. Einrichtung nach einem der Ansprüche 13 bis 14, wobei die vierte Stufe in der Form von mindestens zwei Teilkondensatoren (17, 18) aufgebaut ist, die miteinander in Reihe verbunden sind, wobei die Kondensatoren (17, 18) konfiguriert sind, um in unterschiedlichen Temperaturordnungen zu arbeiten, um Flüssigphasenprodukte mit unterschiedlichen Merkmalen zu kondensieren.

16. Einrichtung nach einem der Ansprüche 13 bis 15, wobei die fünfte Stufe als ein Gaswäscher bereitgestellt ist, wobei der Gaswäscher einen Absorptionsmitteltank (20) umfasst, der flüssiges Absorptionsmittel enthält, wobei der Absorptionsmitteltank (20) mit einem ersten Absorptionsturm (22), der sich stromaufwärts in Strömungsrichtung eines Gasphasenprodukts befindet, und mit einem zweiten Absorptionsturm (23), der mit einem Auslass des ersten Absorptionsturms (22) verbunden ist, kommuniziert, und wobei die Vakuumpumpe (21) in einer Leitung eingesetzt ist, die den ersten und zweiten Absorptionsturm (22, 23) verbindet.

17. Einrichtung nach Anspruch 15, wobei der Absorptionsmitteltank (20) des Gaswäschers mit einem pH-Messgerät (35) ausgestattet ist, um Aufbrauchen des darin enthaltenen flüssigen Absorptionsmittels zu überwachen und um ein Signal auszugeben, das das Aufbrauchen angibt, wenn das Aufbrauchen tatsächlich auftritt.

18. Einrichtung nach Anspruch 17, wobei die fünfte Stufe zwei Gaswäscher umfasst, die parallel miteinander verbunden sind, wobei die Gaswäscher im Verarbeitungspfad mit der Möglichkeit eines Überkreuzens zwischen den Wäschern installiert sind, wobei das Überkreuzen als Reaktion auf das entsprechende Signal des pH-Messgeräts (35), das Aufbrauchen des Absorptionsmittels anzeigt, ausgeführt wird.

19. Einrichtung nach einem der Ansprüche 13 bis 15, wobei ein wassergekühlter Gaskühler (19) zwischen der vierten und fünften Stufe für eine im Wesentlichen vollständige Entfernung des Flüssiggehalts des Gasphasenprodukts eingefügt ist.

20. Einrichtung nach einem der Ansprüche 13 bis 19, wobei die Blätter (12) mit im Wesentlichen gleichmäßiger Winkelversetzung zueinander eingerichtet sind, und die Blätter (12) in einem Winkel (α) zu Linien (e) geneigt sind, die an den Schnittpunkten (M) des Reaktorkörpers (10) und der Radien des Reaktorkörpers (10), die durch die Befestigungspunkte (R) verlaufen, zum Reaktorkörper (10) tangential sind, wobei der Winkel (α) der Blätter vorzugsweise mindestens 45° und höchstens 70°, bevorzugter mindestens 50° und höchstens 65°, besonders bevorzugt etwa 60° ± 2° beträgt.

21. Einrichtung nach einem der Ansprüche 13 bis 20, wobei die erste Stufe in der Form einer Schraubentyp-Zuführeinheit (8) bereitgestellt wird, die in mindestens zwei Bereiche geteilt ist, die imstande sind, auf unterschiedliche Temperaturen zum mindestens teilweise Schmelzen von Ausgangsmaterial erhitzt zu werden, wobei - in Abhängigkeit von den Materialeigenschaften des Ausgangsmaterials - eines von einer Trommeltyp-Zuführung (6) und einer Zahnradpumpe mit erhitztem Mantelraum mit dem Einlass der Schraubentyp-Zuführeinheit (8) zum Zuführen von Ausgangsmaterial aus dem mindestens einen Lagerbehälter (1,1') verbunden ist.

22. Einrichtung nach einem Ansprüche 13 bis 21, wobei die zweite Stufe von einer Überhitzungseinheit (9) bereitgestellt ist und durch ein spiralförmiges Element (36) mit der dritten Stufe verbunden ist.

23. Einrichtung nach einem Ansprüche 13 bis 22, wobei der Röhrenreaktor (39) mit einem Schraubentyp-Extraktionsmechanismus (13, 14) zum Extrahieren eines Festphasenprodukts entlang eines Extraktionspfads bereitgestellt ist, wobei der Schraubentyp-Extraktionsmechanismus (13, 14) luftdicht mit einem Auslass des Röhrenreaktors (39) zum Ablassen des Feststoffanteils aus dem Röhrenreaktor (39) verbunden ist und konfiguriert ist, um bei Verwendung aus dem Feststoffanteil ein Verschlusselement zu bilden, das im Extraktionspfad einen gasdichten Verschluss aufrechterhält.

## Revendications

1. Procédé de traitement d'une charge d'alimentation fournie sous la forme d'une substance organique dans un système fermé au moyen d'une décomposition thermique, le procédé comprenant
la préparation de la charge d'alimentation d'une manière connue en soi pour ledit traitement ;
l'introduction de la charge d'alimentation préparée dans un chemin de traitement et la conversion de ladite charge d'alimentation préparée en un produit en phase gazeuse, au moins un produit en phase liquide et un produit en phase solide en guidant ladite charge d'alimentation le long du chemin de traitement à partir d'une entrée jusqu'à une extrémité de celui-ci, ***caractérisé par*** la mise en oeuvre des étapes suivantes
dans un premier étage du chemin de traitement, le préchauffage de la charge d'alimentation préparée, pour ainsi produire une charge d'alimentation au moins partiellement fondue, puis
dans un deuxième étage du chemin de traitement, le fait de chauffer davantage ladite charge d'alimentation fondue, pour ainsi surchauffer et convertir au moins partiellement ladite charge d'alimentation fondue en phase gazeuse, puis
dans un troisième étage du chemin de traitement, la formation d'un film mince à partir de ladite charge d'alimentation surchauffée et au moins partiellement en phase gazeuse par la formation mécanique d'un film tout en chauffant davantage ladite charge d'alimentation et en soumettant la charge d'alimentation sous la forme du film mince à une décomposition thermique instantanée, pour ainsi décomposer ladite charge d'alimentation en une fraction de vapeur/gaz et une fraction solide, dans lequel ladite fraction de vapeur/gaz se dilate au cours dudit troisième étage du chemin de traitement d'une manière non obstruée, ledit troisième étage du chemin de traitement est fourni par un réacteur tubulaire (39) présentant une paroi interne et un axe longitudinal, dans lequel
une spirale droite sans arbre (11) supportée par des paliers et équipée d'un entraînement électrique est agencée dans le réacteur tubulaire (39) de manière coaxiale avec l'axe longitudinal de celui-ci et avec un espacement par rapport à ladite paroi interne, les aubes (12) s'étendant sensiblement le long de la totalité de la longueur de la spirale sans arbre (11) sont fixées à la circonférence de ladite spirale sans arbre (11), chaque aube (12) s'étendant vers la paroi interne du réacteur tubulaire (39) dans l'espacement qui sépare la paroi interne et la spirale sans arbre (11) pour ainsi fournir des espaces individuels d'une certaine taille entre elles, chacune desdites tailles étant plus petite que la taille de l'espacement, et
la mise en oeuvre de la formation mécanique d'un film en étalant la charge d'alimentation surchauffée sur la paroi interne à travers les espaces entre la paroi interne du réacteur tubulaire (39) et les aubes (12) à une épaisseur d'au plus 2 mm au moyen de la rotation de ladite spirale sans arbre (11), puis
(i) dans un quatrième étage du chemin de traitement, la condensation au moins partielle de la fraction de vapeur/gaz à haute température obtenue, pour ainsi produire le au moins un produit en phase liquide et le produit en phase gazeuse, comprenant en outre
l'extraction du au moins un produit en phase liquide à partir du chemin de traitement et le stockage dudit au moins un produit en phase liquide pour une utilisation ultérieure, et
après le post-traitement du produit en phase gazeuse dans un cinquième étage du chemin de traitement, l'extraction dudit produit en phase gazeuse à partir du chemin de traitement et le stockage dudit produit en phase gazeuse pour une utilisation ultérieure,
(ii) dans la troisième étage du chemin de traitement, la séparation des constituants volatils à partir de ladite fraction solide, puis l'extraction de la fraction solide sèche obtenue à partir du troisième étage en tant que produit en phase solide et le stockage dudit produit en phase solide pour une utilisation ultérieure ; dans lequel
la charge d'alimentation est guidée sur le chemin de traitement tout en maintenant un environnement sans oxygène dans les étages du chemin de traitement.

2. Procédé selon la revendication 1, comprenant en outre la fourniture d'un environnement sans oxygène en créant et en maintenant en continu une surpression dans le chemin de traitement, la valeur de ladite surpression étant établie à au plus +50 mbar, de préférence à au plus +30 mbar, plus préférentiellement à au plus +20 mbar.

3. Procédé selon l'une quelconque des revendications 1 à 2, la mise en oeuvre en outre de la formation mécanique d'un film en étalant la charge d'alimentation surchauffée sur la paroi interne à une épaisseur d'au plus 1,5 mm.

4. Procédé selon l'une quelconque des revendications 1 à 3, dans lequel l'extraction du produit en phase solide est effectuée par extraction par convoyeur à vis de déchargement de ladite fraction solide sèche à travers un chemin d'extraction tout en maintenant un environnement sans oxygène dans le troisième étage du chemin de traitement en compactant le fraction solide sèche et en formant ainsi un élément d'étanchéité à partir de ladite fraction solide sèche qui scelle en continu le chemin d'extraction d'une manière étanche à l'air.

5. Procédé selon l'une quelconque des revendications 1 à 4, comprenant en outre la mise en rotation de ladite spirale sans arbre (11) à basse vitesse, de préférence à 1 à 20 tours/minute, plus préférentiellement 2 à 15 tours/minute.

6. Procédé selon l'une quelconque des revendications 1 à 5, dans lequel, dans le quatrième étage du chemin de traitement, la fraction de vapeur/gaz est soumise à des condensations partielles ultérieures, dans lequel à partir de la fraction de vapeur/gaz dans une première étape de condensation partielle est condensée une fraction d'huile lourde (NF) en tant que courant de produit, et ensuite à partir du résidu de la fraction de vapeur/gaz de la première étape de condensation dans une seconde condensation partielle est condensée une fraction d'huile légère (KF) en tant que courant de produit.

7. Procédé selon la revendication 6, comprenant en outre la réintroduction de la fraction d'huile lourde (NF) dans le deuxième étage du chemin de traitement à des fins de retraitement.

8. Procédé selon l'une quelconque des revendications 1 à 7, comprenant en outre au moins l'un parmi
la mise en oeuvre d'un lavage par absorption de la fraction en phase gazeuse en tant que post-traitement susmentionné dans le cinquième étage du chemin de traitement, ou
la mise en œuvre de ladite surchauffe dans le deuxième étage du chemin de traitement à une température située entre environ 350 °C et 500 °C sélectionnée sur la base des caractéristiques du matériau de la charge d'alimentation, ou
la mise en oeuvre de ladite décomposition thermique instantanée de la charge d'alimentation dans le troisième étage du chemin de traitement à une température située entre environ 500 °C et 650 °C.

9. Procédé selon l'une quelconque des revendications 1 à 8, comprenant en outre la sélection de la charge d'alimentation dans un groupe consistant en les déchets plastiques mélangés, les produits en caoutchouc, les déchets municipaux et les biomasses.

10. Procédé selon l'une quelconque des revendications 1 à 9, comprenant en outre la soumission de la charge d'alimentation à un séchage en lit fluidisé avant l'introduction dans le premier étage du chemin de traitement de manière à diminuer la teneur initiale en humidité de la charge d'alimentation à au plus 8 % en poids.

11. Procédé selon l'une quelconque des revendications 1 à 6, dans lequel la charge d'alimentation est fournie sous la forme d'huiles hautement visqueuses ayant une viscosité cinématique d'environ 800 à 1000 Poise, telles que des huiles noires, des huiles de schiste, et dans lequel le procédé comprend en outre au moins l'un parmi
la mise en oeuvre d'un lavage par absorption de la fraction en phase gazeuse en tant que post-traitement susmentionné dans le cinquième étage du chemin de traitement, ou
la mise en oeuvre de ladite surchauffe dans le deuxième étage du chemin de traitement à une température située entre environ 350 °C et 500 °C sélectionnée sur la base des caractéristiques du matériau de la charge d'alimentation.

12. Procédé selon la revendication 11, comprenant en outre la mise en oeuvre de la décomposition thermique instantanée de la charge d'alimentation dans le troisième étage du chemin de traitement à une température située entre environ 580 °C et 620 °C.

13. Appareil pour traiter une charge d'alimentation fournie sous la forme d'une substance organique dans un système fermé au moyen d'une décomposition thermique, dans lequel un chemin de traitement continu est formé entre un point d'entrée et des points de collecte de produit, et dans lequel la charge d'alimentation est fournie dans au moins un contenant de stockage (1 ; 1'), ledit au moins un contenant de stockage (1 ; 1') est connecté au point d'entrée pour introduire la charge d'alimentation dans le chemin de traitement, dans lequel le chemin de traitement comprend
un premier étage configuré pour faire fondre la charge d'alimentation au moins partiellement par préchauffage ;
un deuxième étage configuré pour surchauffer et ainsi convertir au moins partiellement la charge d'alimentation en une phase gazeuse ;
un troisième étage configuré pour former un film mince à partir de ladite charge d'alimentation surchauffée et au moins partiellement en phase gazeuse par la formation mécanique d'un film et pour créer des fractions de vapeur/gaz et solide à partir de la charge d'alimentation par décomposition thermique instantanée dudit film mince, dans lequel le troisième étage est pourvu d'une structure interne qui permet, en utilisation, une dilation sans obstruction de la fraction de vapeur/gaz, dans lequel
ledit troisième étage est un réacteur tubulaire (39) ayant un corps de réacteur (10) enveloppant un espace de réacteur fermé (10a), le réacteur tubulaire (39) comprenant une paroi interne et un axe longitudinal, une entrée pour l'entrée des charges d'alimentation dans l'espace de réacteur (10a), des sorties séparées pour évacuer chacune des fractions de vapeur/gaz et solide à partir de l'espace de réacteur (10a), un moyen de transport pour transporter la charge d'alimentation/fraction solide à l'intérieur dudit réacteur (39) à partir de ladite entrée jusqu'auxdites sorties et pour effectuer la formation mécanique d'un film en étalant la charge d'alimentation sur la paroi interne du corps de réacteur (10) à une épaisseur d'au moins 2 mm, et
ledit moyen de transport est fourni sous la forme d'une spirale droite sans arbre (11) supportée par des paliers et équipée d'un entraînement électrique agencée à l'intérieur du réacteur tubulaire (39) de manière coaxiale avec l'axe longitudinal du réacteur et avec un espacement par rapport à ladite paroi interne, lesdites aubes (12) s'étendant sensiblement le long de la totalité de la longueur de la spirale sans arbre (11) sont fixées par des points de fixation (R) à la circonférence de ladite spirale sans arbre (11), chaque aube (12) s'étendant vers la paroi interne du réacteur tubulaire (39) dans l'espacement qui sépare la paroi interne et la spirale sans arbre (11) pour ainsi fournir des espaces individuels d'une certaine taille entre elles, chacune desdites tailles étant plus petite que la taille de l'espacement ;
un quatrième étage configuré pour produire des produits en phase liquide et en phase gazeuse au moyen d'une condensation partielle d'une fraction de vapeur/gaz à haute température ; et
un cinquième étage configuré pour le post-traitement d'un produit en phase gazeuse ; dans lequel
le point d'entrée est agencé dans le premier étage et les points de collecte de produit sont agencés dans lesdits troisième, quatrième et cinquième étages.

14. Appareil selon la revendication 13, dans lequel une pompe à vide (21) est insérée dans le chemin de traitement de manière à maintenir une surpression constante dans le troisième étage par rapport à la pression atmosphérique, dans lequel ladite surpression est d'au plus +50 mbar, de préférence d'au plus +30 mbar, plus préférentiellement d'au plus +20 mbar.

15. Appareil selon l'une quelconque des revendications 13 à 14, dans lequel le quatrième étage est construit sous la forme d'au moins deux condenseurs partiels (17, 18) connectés en série l'un à l'autre, lesdits condenseurs (17, 18) étant configurés pour fonctionner à différents régimes de température pour condenser des produits en phase liquide ayant des propriétés différentes.

16. Appareil selon l'une quelconque des revendications 13 à 15, dans lequel le cinquième étage est fourni sous la forme d'un laveur de gaz, le laveur de gaz comprenant une cuve d'absorbant (20) contenant un absorbant de liquide, la cuve d'absorbant (20) étant en communication avec une première tour d'absorption (22) située en amont dans la direction d'écoulement d'un produit en phase gazeuse et avec une seconde tour d'absorption (23) connectée à une sortie de la première tour d'absorption (22) et dans lequel ladite pompe à vide (21) est insérée dans un conduit connectant lesdites première et seconde tours d'absorption (22, 23).

17. Appareil selon la revendication 15, dans lequel ladite cuve d'absorbant (20) du laveur de gaz est équipée d'un pH-mètre (35) pour surveiller l'épuisement de l'absorbant de liquide contenu dans celle-ci, et pour émettre un signal indiquant l'épuisement quand l'épuisement a effectivement lieu.

18. Appareil selon la revendication 17, dans lequel le cinquième étage comprend deux laveurs de gaz connectés en parallèle l'un à l'autre, les laveurs de gaz étant installés dans le chemin de traitement avec la possibilité de changer entre lesdits laveurs, dans lequel ledit changement est effectué en réponse au signal respectif du pH-mètre (35) indiquant l'épuisement de l'absorbant.

19. Appareil selon l'une quelconque des revendications 13 à 15, dans lequel un refroidisseur de gaz refroidi à l'eau (19) est inséré entre les quatrième et cinquième étages pour une élimination sensiblement complète de la teneur en liquide du produit en phase gazeuse.

20. Appareil selon l'une quelconque des revendications 13 à 19, dans lequel les aubes (12) sont agencées avec un déplacement angulaire sensiblement uniforme les unes par rapport aux autres, et les aubes (12) sont inclinées à un angle (α) par rapport à des lignes (e) tangentielles au corps de réacteur (10) aux points d'intersection (M) du corps de réacteur (10) et des rayons du corps de réacteur (10) passant par lesdits points de fixation (R), dans lequel l'angle (a) des aubes est de préférence d'au moins 45° et d'au plus 70°, plus préférentiellement d'au moins 50° et d'au plus 65°, le plus préférentiellement d'environ 60° ± 2°.

21. Appareil selon l'une quelconque des revendications 13 à 20, dans lequel le premier étage est fourni sous la forme d'une unité d'alimentation de type à vis (8) divisée en au moins deux zones capables d'être chauffées à différentes températures pour fondre au moins partiellement une charge d'alimentation, dans lequel - en fonction des caractéristiques du matériau de la charge d'alimentation - l'un parmi un dispositif d'alimentation de type à tambour (6) et une pompe à engrenages avec espace de chemise chauffée est connecté à l'entrée de l'unité d'alimentation de type à vis (8) pour introduire une charge d'alimentation à partir du au moins un contenant de stockage (1, 1').

22. Appareil selon l'une quelconque des revendications 13 à 21, dans lequel le deuxième étage est fourni par une unité de surchauffe (9) et est connecté au troisième étage par l'intermédiaire d'un élément hélicoïdal (36).

23. Appareil selon l'une quelconque des revendications 13 à 22, dans lequel le réacteur tubulaire (39) est pourvu d'un mécanisme d'extraction de type à vis (13, 14) pour extraire un produit en phase solide le long d'un chemin d'extraction, ledit mécanisme d'extraction de type à vis (13, 14) est connecté de manière étanche à l'air à une sortie du réacteur tubulaire (39) pour évacuer la phase solide à partir du réacteur tubulaire (39) et configuré pour former, en utilisation, un élément d'étanchéité à partir de la fraction solide qui maintient un étanchéité continue au gaz dans le chemin d'extraction.
